# EUROPEAN PATENT APPLICATION

(11) **EP 3 960 796 A1**
(43) Date of publication of application: **02.03.2022**
(21) Application number: 20794751.6
(22) Date of filing: 27.04.2020
(51) Int. Cl.: C08J 5/04, B29B 11/16, B29C 70/20, B32B 5/28, C08J 5/24

(54) **METHOD FOR MANUFACTURING MOLDED ARTICLE OF FIBER-REINFORCED COMPOSITE MATERIAL, REINFORCING FIBER SUBSTRATE AND MOLDED ARTICLE OF FIBER-REINFORCED COMPOSITE MATERIAL**

(30) Priority: 26.04.2019 JP 2019086112
(71) Applicant: Mitsubishi Chemical Corporation, Chiyoda-ku Tokyo 100-8251 (JP)
(72) Inventor: FURUHASHI, Yuma, Tokyo 100-8251 (JP); ICHINO, Masahiro, Tokyo 100-8251 (JP); IKEDA, Kazuhisa, Tokyo 100-8251 (JP)
(74) Representative: Hoffmann Eitle
(86) International application number: PCT/JP2020/017973
(87) International publication number: WO 2020/218610

(57) **Abstract**

A method for manufacturing a fiber-reinforced composite material molded article of the present invention includes a step of causing a reinforcing fiber base material to undergo deformation with use of a mold, the reinforcing fiber base material including: reinforcing fibers which are unidirectionally oriented; and a matrix resin composition. The reinforcing fiber base material has a cut in a zone which is to undergo shear deformation and/or compressive deformation, the cut being substantially parallel to an orientation direction of the reinforcing fibers, and has substantially no cut that cuts through a fiber.

## Description

### Technical Field

The present invention relates to a method for manufacturing a fiber-reinforced composite material molded article, a reinforcing fiber base material, and the fiber-reinforced composite material molded article.

### Background Art

A prepreg for a fiber-reinforced composite material which prepreg contains reinforcing fiber and a matrix resin is widely used for sport, aerospace, and general industrial applications. This is because a cured product or a solidified product (fiber-reinforced composite material) of the prepreg is lightweight and has excellent mechanical properties. The fiber-reinforced composite material is produced, for example, by molding a prepreg laminate, formed by stacking a plurality of prepregs, by heating and pressurization with use of an autoclave or a pressing machine.

As a high-cycle molding method, a method is known in which a prepreg is molded such that a plurality of prepregs each containing reinforcing fibers and a matrix resin composition are stacked together, a preform is prepared from a laminate obtained, and then a fiber-reinforced composite material molded article is manufactured by subjecting the preform to heating and pressurization to cure or solidify the resin composition.

Patent Literature 1 discloses a method for manufacturing a fiber-reinforced composite material, in which a prepreg having cuts including (i) a cut that is substantially parallel to an orientation direction of reinforcing fibers and (ii) a cut that cuts across the reinforcing fibers is used to provide the fiber-reinforced composite material which not only exhibits appearance quality and mechanical properties when a matrix resin is cured but also has excellent conformity to three-dimensional shapes.

### Citation List

### [Patent Literature]

[Patent Literature 1] International Publication No. WO 2018/055932

### Summary of Invention

### Technical Problem

However, the conventional technique described above achieves the conformity to three-dimensional shapes by cutting through reinforcing fibers (continuous reinforcing fibers) each of which is continuous. In general, a fiber-reinforced composite material molded article in which continuous fibers are cut through may have problems such as a lower strength of the molded article, due to impairment of excellent mechanical properties derived from the continuous fibers. A conventional technique thus still has room for improvement in terms of strength that is obtained in a case where a fiber-reinforced composite material molded article is manufactured.

The present invention has been made under the circumstances. An objective of the present invention is to provide a fiber-reinforced composite material molded article having excellent conformity to a three-dimensional shape, without impairment of mechanical properties of continuous fibers.

### Solution to Problem

In order to attain the objective, a method for manufacturing a fiber-reinforced composite material molded article in accordance with an aspect of the present invention includes a step of causing a reinforcing fiber base material to undergo deformation with use of a mold, the reinforcing fiber base material including: reinforcing fibers which are unidirectionally oriented; and a matrix resin composition, the reinforcing fiber base material including a zone which is to undergo shear deformation and/or compressive deformation, having a cut in the zone which is to undergo the shear deformation and/or the compressive deformation, the cut being substantially parallel to an orientation direction of the reinforcing fibers, and having substantially no cut that cuts through a fiber.

A reinforcing fiber base material in accordance with an aspect of the present invention includes: reinforcing fibers which are unidirectionally oriented; and a matrix resin composition, the reinforcing fiber base material having a cut in a zone which is to undergo shear deformation and/or compressive deformation, the cut being substantially parallel to an orientation direction of the reinforcing fibers, and having substantially no cut that cuts through a fiber.

A fiber-reinforced composite material molded article in accordance with an aspect of the present invention includes a cured product or a solidified product of the reinforcing fiber base material.

### Advantageous Effects of Invention

According to an aspect of the present invention, it is possible to manufacture a fiber-reinforced composite material molded article having a good appearance and a high strength.

### Brief Description of Drawings

Fig. 1 is a view schematically illustrating an example of a reinforcing fiber base material in accordance with an embodiment of the present invention.
Fig. 2 is a view schematically illustrating an example of a structure of a lower mold of a preform mold in accordance with an embodiment of the present invention.
Fig. 3 is a view for describing a geometric center and a Y direction in a plan view of a preform mold and dimensions of a three-dimensional shape in the Y direction in accordance with an embodiment of the present invention, the view schematically illustrating an example of a structure of a lower mold of the preform mold.
Fig. 4 is a view for describing a geometric center and an X direction in a plan view of a preform mold and dimensions of a three-dimensional shape in the X direction in accordance with an embodiment of the present invention, the view schematically illustrating an example of a structure of a lower mold of the preform mold.
Fig. 5 is a view for describing measurement of the amount of deformation of a reinforcing fiber base material in accordance with an embodiment of the present invention.
Fig. 6 is a view for describing the amount of deformation of a reinforcing fiber base material in accordance with an embodiment of the present invention.
Fig. 7 is a view schematically illustrating a prepreg sheet in which fibers are oriented at 0° and a prepreg sheet in which fibers are oriented at 90°.
Fig. 8 is a view illustrating a cutting step of cutting a reinforcing fiber base material or a preform in accordance with an embodiment of the present invention.
Fig. 9 is a view illustrating a compacting step in accordance with an embodiment of the present invention.
Fig. 10 is a view schematically illustrating an arrangement of cuts in prepreg sheets used in Example 1.
Fig. 11 is a view schematically illustrating an arrangement of cuts in prepreg sheets used in Example 2.
Fig. 12 is a view schematically illustrating an arrangement of cuts in prepreg sheets used in Example 3.
Fig. 13 is a view schematically illustrating an arrangement of cuts in prepreg sheets used in Example 4.
Fig. 14 is a view schematically illustrating an arrangement of cuts in a prepreg sheet used in Example 5.
Fig. 15 is a view schematically illustrating an arrangement of cuts in prepreg sheets used in Example 6.
Fig. 16 is a view schematically illustrating an arrangement of cuts in prepreg sheets used in Example 7.
Fig. 17 is a view schematically illustrating an arrangement of cuts in a prepreg sheet used in Example 8.
Fig. 18 is a view schematically illustrating an arrangement of cuts in prepreg sheets used in Example 9.
Fig. 19 is a view schematically illustrating prepreg sheets used in Comparative Example 1.
Fig. 20 is photographs of a preform obtained in Example 1.
Fig. 21 is photographs of a preform obtained in Example 2.
Fig. 22 is photographs of a preform obtained in Example 3.
Fig. 23 is photographs of a preform obtained in Example 7.
Fig. 24 is photographs of a preform obtained in Example 8.
Fig. 25 is photographs of a preform obtained in Example 9.
Fig. 26 is photographs of a preform obtained in Comparative Example 1.

### Description of Embodiments

The following description will discuss embodiments of the present invention. Note that the phrase "A and/or B" in the present specification refers to "one or both of A and

### B".

### [1. Method for manufacturing preform]

A method for manufacturing a preform in accordance with an embodiment of the present invention includes a step of causing a reinforcing fiber base material to undergo deformation with use of a mold. Hereinafter, the mold used in manufacture of the preform may be referred to as a "preform mold". The reinforcing fiber base material includes a zone which is to undergo shear deformation and/or compressive deformation. The reinforcing fiber base material has a cut for causing the zone which is to undergo shear deformation and/or compressive deformation to conform to the preform mold. The cut is a cut for causing the zone to undergo shear deformation and/or compressive deformation so as to conform to the preform mold. The cut is a cut substantially parallel to an orientation direction of reinforcing fibers.

The reinforcing fiber base material has substantially no cut that cuts through a fiber in the zone which is to undergo shear deformation and/or compressive deformation.

For purposes such as increasing the conformity to a three-dimensional shape, the reinforcing fiber base material is preferably configured such that the zone which is to undergo shear deformation and/or compressive deformation undergoes shear deformation and/or compressive deformation during deformation with use of a mold. The phrase "during deformation with use of a mold" means, for example, "during preforming" in which the preform is formed from the reinforcing fiber base material or "during molding" in which a fiber-reinforced composite material molded article is molded from the reinforcing fiber base material or the preform.

The preform is obtained by preforming the reinforcing fiber base material (described later) to premold the reinforcing fiber base material into a net shape of an intended molded article. The preform to be obtained can have a shape that is identical to or close (similar) to the shape of the fiber-reinforced composite material molded article.

The shape that is close to the shape of the fiber-reinforced composite material molded article is, for example, a shape that is so similar to the shape of the fiber-reinforced composite material molded article as to allow the preform to be contained in a mold that is used in a molding step (described later). Hereinafter, a mold used in molding may be referred to as a "molding mold". In order to manufacture a molded article with good repeatability, it is preferable to prepare a preform that has a near net shape (three-dimensional shape) of the desired shape of the molded article, and it is more preferable to manufacture a preform that has a net shape (three-dimensional shape) identical to the desired shape of the molded article. In a case where a reinforcing fiber base material or a laminate, in which reinforcing fiber base materials are stacked together, is thus preformed into a preform before the molding step of obtaining an intended fiber-reinforced composite material molded article, it is possible to manufacture, with high quality and high efficiency, a fiber-reinforced composite material molded article that has a desired shape.

Although depending on the desired physical properties, shape, and the like, the thickness of the preform is preferably not less than 0.05 mm, more preferably not less than 0.1 mm, and even more preferably not less than 0.15 mm. The thickness is preferably not more than 3.0 mm, more preferably not more than 2.0 mm, and even more preferably not more than 1.0 mm. In a case where the thickness of the preform is not less than the foregoing lower limit, the number of steps of stacking into a preform having the desired thickness is reduced. In a case where the thickness of the preform is not more than the foregoing upper limit, it is possible to more suitably carry out preforming into a three-dimensional shape in a preforming step. A fiber-reinforced composite material that is molded with use of the preform has sufficient strength while being lightweight. A preferable method for molding the preform and the like will be described later.

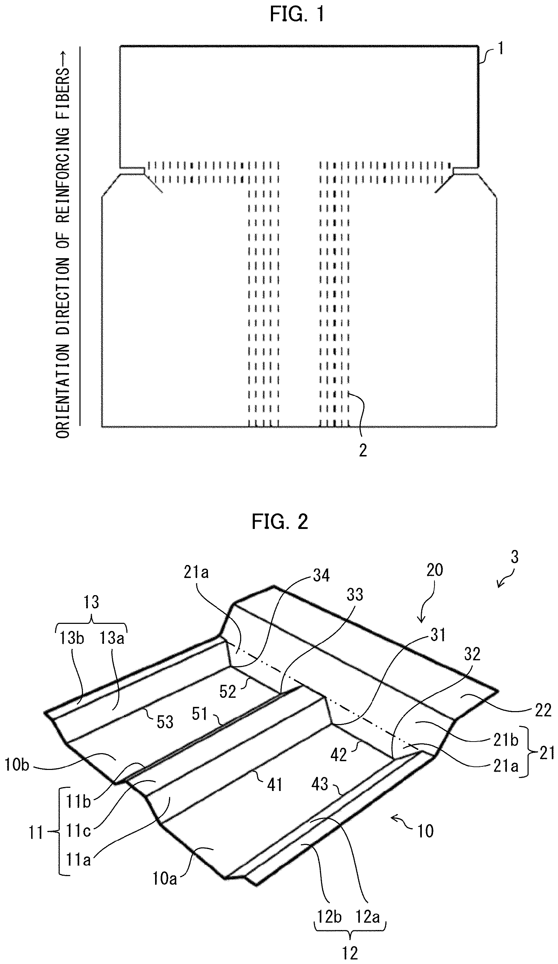

The reinforcing fiber base material to be used contains reinforcing fibers unidirectionally oriented and a matrix resin composition and has, in a zone which is to undergo shear deformation and/or compressive deformation, a cut for causing the zone to undergo shear deformation and/or compressive deformation so as to conform to a mold. In the present specification, a "mold" encompasses a preform mold and a molding mold. Fig. 1 is a view schematically illustrating an example of a reinforcing fiber base material in accordance with an embodiment of the present invention. As illustrated in Fig. 1, a reinforcing fiber base material 1 has, in a zone of a reinforcing fiber base material which zone is to undergo shear deformation and/or compressive deformation, a cut 2 for causing the zone to undergo shear deformation and/or compressive deformation so as to conform to a mold. The cut 2 may be provided in a whole or a part of the zone of the reinforcing fiber base material which zone is to undergo shear deformation and/or compressive deformation. Even in a state where the reinforcing fiber base material does not have the cut 2, the reinforcing fiber base material can undergo shear deformation and/or compressive deformation to a certain extent by being heated during preforming or molding. As such, it is preferable that the cut 2 be provided in a portion of the reinforcing fiber base material which portion undergoes deformation in an amount exceeding the amount of shear deformation measured in accordance with a method (described later) of measuring the amount of shear deformation of the reinforcing fiber base material in a state where the cut 2 is not provided. The reinforcing fiber base material may have the cut 2 in a zone other than the zone which is to undergo shear deformation and/or compressive deformation. The cut 2 extends substantially parallel to an orientation direction of reinforcing fibers. Hereinafter, the cut 2 may be referred to as a "parallel cut". A reinforcing fiber base material which contains reinforcing fibers unidirectionally oriented and a matrix resin composition and has a parallel cut may hereinafter be referred to as a "reinforcing fiber base material having a parallel cut".

The term "substantially parallel" means a direction which extends along an orientation direction of reinforcing fibers to an extent that the cut does not cut through a group of reinforcing fibers. For example, "substantially parallel" means being parallel to an orientation direction of a group of reinforcing fibers which are unidirectionally oriented in a reinforcing fiber base material. The orientation of reinforcing fibers in the reinforcing fiber base material can be disrupted due to pressing in a manufacturing process of the reinforcing fiber base material. As such, a parallel cut that satisfies the above condition may cut through only some of the reinforcing fibers of the reinforcing fiber base material.

For example, in a case where a direction in which the cut extends and an orientation direction of the reinforcing fibers forms an angle of 0° to 10°, the cut is considered substantially parallel with respect to the reinforcing fibers. The angle is preferably 0° to 3°, more preferably 0° to 1.7°, particularly preferably 0° to 1.5°, and most preferably 0° to 1°. The direction in which the cut extends and the orientation direction of the reinforcing fibers can be confirmed by visual observation, or can be confirmed on the basis of data obtained by a qualitative or quantitative process using image processing with respect to an image which is captured by a 3D laser scanner, X-ray CT, or the like and which represents a zone of the reinforcing fiber base material which zone is to undergo shear deformation and/or compressive deformation.

The reinforcing fiber base material has a substantially parallel cut in a zone which is to undergo shear deformation and/or compressive deformation. It can be also said that the reinforcing fiber base material has, in a zone which is to undergo shear deformation and/or compressive deformation, substantially no cut that cuts through a fiber (hereinafter, a cut that cuts through a fiber may be referred to as a "cut-through cut"). The "cut-through cut" can be defined such that, for example, in a case where a direction in which a cut extends and an orientation direction of the reinforcing fibers form an angle of more than 10°, the cut is considered to be a cut-through cut. Alternatively, the "cut-through cut" can be defined as a cut that cuts through a reinforcing fiber of a reinforcing fiber base material and that imparts extensibility to the reinforcing fiber base material when a tensile stress is applied to the reinforcing fiber base material in an orientation direction of the reinforcing fibers of the reinforcing fiber base material. Alternatively, the "cut-through cut" can refer to a cut that imparts fluidity to a reinforcing fiber on or in the vicinity of a cut surface of the reinforcing fiber base material which surface is cut by the cut.

The reinforcing fiber base material in accordance with the present embodiment is characterized by having substantially no cut-through cut. The concept of the wording "having substantially no cut-through cut" encompasses not only a case in which reinforcing fiber base material has no cut-through cut at all, but also a case in which reinforcing fiber base material has some cut-through cuts, provided that a molded article obtained has a commercially acceptable level of strength.

In terms of preventing a decrease in strength due to the cutting-through of a fiber, in a zone which is to undergo shear deformation and/or compressive deformation, a proportion of (i) a total area of a region included in the reinforcing fiber base material and constituted by a continuous reinforcing fiber, which is not cut through, and a resin to (ii) an area of the zone which is to undergo shear deformation and/or compressive deformation is preferably more than 5%, more preferably more than 10%, even more preferably more than 25%, particularly preferably more than 50%, and most preferably more than 80%. Even more preferably, the proportion is preferably not less than 90%, more preferably not less than 95%, even more preferably not less than 99%, particularly preferably not less than 99.5%, and most preferably not less than 99.9%. In terms of achieving both ease of shear deformation and/or compressive deformation and strength of a molded article, it is particularly preferably that a reinforcing fiber base material having the above parallel cut have only a substantially parallel cut.

It is preferable that a parallel cut pass through the reinforcing fiber base material over substantially the entire length of the parallel cut. As described above, a parallel cut is a cut for causing a zone of the reinforcing fiber base material, which zone is to undergo shear deformation and/or compressive deformation, to undergo shear deformation and/or compressive deformation so as to conform to a preform mold. In the zone which is to undergo shear deformation and/or compressive deformation, the reinforcing fiber base material may have cuts for other functions, provided that the above function of the parallel cut is exhibited. From these points of view, for example, a proportion of the number of parallel cuts as described above to the total number of cuts in the zone which is to undergo shear deformation and/or compressive deformation is preferably not less than 0.5%, and more preferably not less than 5%. In terms of increasing the strength of the molded article, the proportion is even more preferably not less than 50%, particularly preferably not less than 70%, and most preferably not less than 80%. Even more preferably, the proportion is preferably not less than 90%, more preferably not less than 95%, even more preferably not less than 99%, particularly preferably not less than 99.5%, and most preferably not less than 99.9%. In terms of achieving both ease of shear deformation and/or compressive deformation and strength of a molded article, it is particularly preferably that a reinforcing fiber base material having the above parallel cut have only a substantially parallel cut.

It is only necessary that a parallel cut(s) is/are present in sufficient amount and length to allow effects of the present embodiment to be exhibited. The amount and length of the parallel cut(s) which are present will be described later.

In a case where a reinforcing fiber base material having the above parallel cut is used, the reinforcing fibers contained in the reinforcing fiber base material are less restricted by the matrix resin composition during shear deformation and/or compressive deformation. This makes it easier for the reinforcing fiber base material to undergo shear deformation and/or compressive deformation.

The zone which is to undergo shear deformation and/or compressive deformation is a zone which is at least a part of the reinforcing fiber base material and which undergoes one or both of shear deformation and compressive deformation when a force in an out-of-plane direction is applied to the reinforcing fiber base material in order to cause deformation with use of a mold. For example, the zone which is to undergo shear deformation and/or compressive deformation is determined according to the desired preformed shape in the preforming step (described later) or according to the desired molded shape in the molding step (described later). The desired preformed shape is the shape of a composite material molded article or a shape that is close to the shape of the composite material molded article and that should be achieved by a preform. The desired molded shape is the shape of a composite material molded article or a shape that is close to the shape of the composite material molded article to the extent that the shape of the composite material molded article can be achieved by post-processing such as trimming.

The desired molded shape include, for example, a flat surface and/or a three-dimensional shape as illustrated in Fig. 2. Fig. 2 is a view schematically illustrating, as an example of a structure of a lower mold of a preform mold in accordance with an embodiment of the present invention, surfaces which make contact with the reinforcing fiber base material and/or a material such as a resin film for improving appearance. Hereinafter, surfaces of a mold which surfaces make contact with the reinforcing fiber base material or a material such as a resin film for improving appearance are referred to as a "mold". The configuration of the lower mold illustrated in Fig. 2 will be described later in detail. The desired molded shape is a shape of an imprint of the preform mold. Thus, the shape of a mold such as a preform mold may be a three-dimensional shape.

The three-dimensional shape means a solid shape instead of a planar shape, and is composed of one of or a combination of two or more of the following: a planar surface, a developable surface, and a three-dimensional curved surface. A developable surface is a surface that can be developed and thereby flattened into a plane without stretching or compression. An example of the developable surface is a conical surface. A three-dimensional curved surface is a surface that cannot be formed without stretching or compression of a planar surface, and is a surface that cannot be developed and thereby flattened into a plane. An example of the three-dimensional curved surface is a spherical surface. In a case where the desired molded shape is composed of a developable surface and/or a three-dimensional shape, complex deformation that contains shearing, compression, or both of them occurs during preforming; therefore, an advantage of the method for manufacturing a fiber-reinforced composite material molded article in accordance with the present embodiment is likely to be more apparent.

When a planar sheet member having a two-dimensional shape is pressed to conform to a preform mold for causing the sheet member to conform to the three-dimensional shape, shear deformation typically occurs during deformation with use of the mold. In a case where the area of a surface to which the original sheet member conforms is smaller than the area of the original sheet member, compressive deformation occurs during the deformation with use of the mold. Shear deformation and compressive deformation may concurrently occur.

It is generally difficult to preform a planar sheet member having a two-dimensional shape, in particular, a reinforcing fiber base material in which reinforcing fibers are unidirectionally oriented, by causing the reinforcing fiber base material to undergo deformation to conform to a lower mold having a three-dimensional shape as illustrated in Fig. 2. Causing the reinforcing fiber base material to conform to the three-dimensional shape results in poor appearance such as (i) fiber meandering, in which an orientation direction of the reinforcing fibers is disturbed to look meandering, and (ii) wrinkles which protrude in an out-of-plane direction of the reinforcing fiber base material. Although the poor appearance can be concealed by being painted over, this kind of poor appearance, which impairs the straightness of the fibers, results in a reduced strength of the molded article and is thus undesirable. An in-plane direction means a horizontal direction in a plane including the reinforcing fiber base material having a planar shape, whereas an out-of-plane direction refers to a direction orthogonal to such an in-plane direction.

The following description will discuss a preform mold in detail. The structure and shape of the preform mold can be employed as the structure and shape of a molding mold.

### [Preform mold]

A preform mold is a mold for producing a preform. Specifically, a preform mold is a mold with which it is possible to preform a planar reinforcing fiber base material into the shape of a composite material molded article (end product) or a shape close to the shape of the composite material molded article. The preform mold may be the same as or different from a mold for producing the composite material molded article, provided that it is possible to preform a reinforcing fiber base material into a preform. Note that the "shape close to the shape of the composite material molded article" can be described as a shape that has been made close to the shape of the composite material molded article to the extent that the preform can be put in the mold for molding the composite material molded article and heat and pressure can be applied to the preform.

The preform mold can be a typical mold that includes a lower mold and an upper mold that has a shape corresponding to the lower mold. The preform mold may be constituted by only one of the lower mold and the upper mold. The upper mold and the lower mold may each be a single-part mold or may be splittable into a plurality of parts. The upper mold and the lower mold may be arranged on top of each other along the direction of gravitational force, and may be placed upright or inclined. In such cases, one of the two molds which are fitted with each other is referred to as an upper mold. Either an embodiment in which the upper mold and the lower mold of the preform mold are fitted to each other while a reinforcing fiber base material placed in the upper mold or an embodiment in which the upper mold and the lower mold of the preform mold are fitted to each other while a reinforcing fiber base material placed in the lower mold may be employed in the present embodiment; however, in the present embodiment, the reinforcing fiber base material is placed in the lower mold. It is preferable that the reinforcing fiber base material be workable in a mold, in terms of workability and productivity.

The preform can be produced in such a manner that (i) a reinforcing fiber base material having the above cut or two or more reinforcing fiber base materials each having the above-described cut is/are placed in a preform mold and (ii) the reinforcing fiber base material(s) is/are preformed with use of the preform mold. In a case where a mold that includes a lower mold and an upper mold that has a shape corresponding to the lower mold is used, a preform can be obtained by preforming by fitting the upper mold and the lower mold with each other.

A reinforcing fiber base material having the parallel cut can be preformed such that a single reinforcing fiber base material is preformed into a preform, or such that a laminate including two or more reinforcing fiber base materials, each having the parallel cut, is preformed into a preform, provided that effects of the present embodiment can be exhibited. Further, in the present embodiment, (i) other reinforcing fiber base material(s) different from a reinforcing fiber base material having the parallel cut or (ii) a resin film for improving appearance can be further included, provided that at least one reinforcing fiber base material having the parallel cut is used. The resin film can include a base material containing reinforcing fiber such as glass scrim cloth.

For example, a laminate, in which a reinforcing fiber base material that has the parallel cut and a reinforcing fiber base material that does not have the parallel cut are stacked alternately or randomly, can be preformed into a preform. In terms of increasing the conformity to a mold, the number of reinforcing fiber base materials each having the parallel cut is preferably not less than 50%, more preferably not less than 75%, even more preferably not less than 80%, and particularly preferably not less than 90% of the total number of reinforcing fiber base materials in the laminate. It is most preferable that only a reinforcing fiber base material having the parallel cut or only a laminate, in which reinforcing fiber base materials each having the parallel cut are stacked together, be used, except in a case where a different type of reinforcing fiber base material is used in combination to constitute a part of the molded article. An example of such use is for reinforcement.

In a case of obtaining a preform by preforming a plurality of reinforcing fiber base materials and/or a plurality of reinforcing fiber base materials each containing a matrix resin composition, (i) the preforming can be carried out such that all of the reinforcing fiber base materials or all of the reinforcing fiber base materials each containing the matrix resin composition are stacked together, and then a laminate thus obtained is preformed, or (ii) the preforming can be carried out in a plurality of times, in which (a) one or a few reinforcing fiber base materials or one or a few reinforcing fiber base materials each containing the matrix resin composition is/are preformed at a time or (b) one or a few laminates, in each of which a plurality of reinforcing fiber base materials or a plurality of reinforcing fiber base materials each containing the matrix resin composition are stacked together, are preformed at a time. In this case, all layers can be made of the reinforcing fiber base material containing the matrix resin composition, or a part of the layers can be made of the reinforcing fiber base material containing no matrix resin composition. It is preferable that all layers be made of the reinforcing fiber base material containing the matrix resin composition, in terms of making it less likely that the matrix resin composition which has been cured or solidified has missing parts in a molded article. Also in this case, at least one reinforcing fiber base material having a parallel cut is used.

In a case of obtaining one preform by carrying out a plurality of times of preforming, the preform can be obtained in such a manner that (i) a plurality of preliminary preforms, which are identical in shape and each of which is formed with use of a reinforcing fiber base material or a laminate(s), are obtained and (ii) then the preliminary preforms are stacked together and preformed. Alternatively, the preform can be obtained in such a manner than a preliminary preform, on which a reinforcing fiber base material or a laminate is placed, is subjected to further preforming. That is, on one or more reinforcing fiber base materials which have been preformed in the preform mold and each of which has a cut, another one or more reinforcing fiber base materials each having a cut can be placed to be subjected to further preforming with use of the preform mold. In the latter case, the further preforming can be repeated a plurality of times. Use of the former method makes it possible to obtain a preform efficiently. Use of the latter method makes it possible to obtain a preform having an extremely good appearance even in a case where the preform is thick, because the preliminary preforms identical in shape can be stacked together without a bad fitting between the preliminary preforms. As to reinforcing fiber base material, all layers can be constituted by a reinforcing fiber base material containing a matrix resin composition or a part of the layers can be constituted by a reinforcing fiber base material containing a matrix resin composition. It is preferable that a reinforcing fiber base material containing a matrix resin composition be used in all of the layers, in terms of making it less likely that a matrix resin composition which has been cured or solidified has missing parts in the molded article. Note that at least one reinforcing fiber base material having a parallel cut is used in the preform.

The following description will discuss the parallel cut in further detail with reference to, for example, the lower mold illustrated in Fig. 2.

### (Structure of preform mold)

The lower mold illustrated in Fig. 2 is a part of a preform mold for producing a preform for, for example, a floor pan for placement in an automobile. Note that the preform and the floor pan (composite material molded article) have a shape of an imprint of the inner surface (surfaces which make contact with a material to be preformed or molded) of the lower mold (have substantially the same shape as the inner surface), because a reinforcing fiber base material in the form of a sheet is used.

The preform mold includes an upper mold and a lower mold 3. The lower mold 3 includes a corrugated structure 10 and a front raised portion 20 located at one end of the corrugated structure 10.

The corrugated structure 10 is a wavelike structure for reinforcement. The corrugated structure 10 includes: bottoms 10a and 10b; a long protrusion 11 lying between the bottoms; and peripheral protrusions 12 and 13 located at respective side edges of the corrugated structure 10.

Each of the bottoms 10a and 10b is constituted by a flat surface which is rectangle in plan view. The bottom 10a has a first side 41, a second side 42, and a third side 43, whereas the bottom 10b has a first side 51, a second side 52, and a third side 53. The first side 41 (51) and the third side 43 (53) are, for example, a pair of long sides of a rectangle, and the second side 42 (52) is, for example, a short side of the rectangle.

The long protrusion 11 is composed of: a wall 11a that extends upward from one side edge of the bottom 10a; a wall 11b that extends upward from the other side edge of the bottom 10b; and a top surface 11c lying between the walls. The walls 11a and 11b are such that their surfaces which make contact with a material such as the reinforcing fiber base material are sloping surfaces at an obtuse angle to surfaces of the bottoms 10a and 10b which make contact with the reinforcing fiber base material. The top surface 11c is composed of a flat surface parallel to the bottoms 10a and 10b. In the present specification, a "material" refers to a reinforcing fiber base material and a material (e.g., a resin film for improving appearance) of a fiber-reinforced composite material molded article other than the reinforcing fiber base material. Hereinafter, a "material" may be referred to as a "material such as a reinforcing fiber base material". Note that a material of a fiber-reinforced composite material molded article other than a reinforcing fiber base material may be provided so as to be laid on a part of the reinforcing fiber base material.

The peripheral protrusion 12 includes: a wall 12a that extends upward from the other side edge of the bottom 10a; and a top surface 12b that is located at the top of the wall 12a. The wall 12a is such that its surface which makes contact with a material such as the reinforcing fiber base material is a sloping surface at an obtuse angle to the surface of the bottom 10a which makes contact with a material such as the reinforcing fiber base material. The top surface 12b is composed of a flat surface parallel to the bottom 10a. Similarly to the peripheral protrusion 12, the peripheral protrusion 13 includes a wall 13a and a top surface 13b.

The front raised portion 20 includes: a wall 21 that extends upward from one end of the corrugated structure 10; and a top surface 22 located at the top of the wall 21. The wall 21 is such that its surface which makes contact with a material such as the reinforcing fiber base material is a sloping surface at an obtuse angle to the surfaces of the bottoms 10a and 10b which make contact with a material such as the reinforcing fiber base material. The top surface 22 is composed of a flat surface parallel to the bottoms 10a and 10b.

At the bottom 10a (10b), the first side 41 (51) and the second side 42 (52) form a corner 31 (33), whereas the second side 42 (52) and the third side 43 (53) form a corner 32 (34). More specifically, there is the corner 31 formed at the intersection of the bottom 10a, the wall 11a, and the wall 21, and there is the corner 32 formed at the intersection of the bottom 10a, the wall 12a, and the wall 21. Similarly, there is the corner 33 formed at the intersection of the bottom 10b, the wall 11b, and the wall 21, and there is the corner 34 at the intersection of the bottom 10b, the wall 13a, and the wall 21.

The vertical positions of the top surfaces 11c, 12b, and 13b relative to the bottoms 10a and 10b are equal to each other. The top surface 22 is located higher than the other top surfaces. The vertical positions of these top surfaces may be 2 cm to 40 cm, although this depends on the specifications of a product. The angle at which the walls 11a, 11b, 12a, 13a, and 21 slope with respect to the bottoms 10a and 10b may be 30° to 90°, although this also depends on the specifications of the product. The angle at which the walls 11a, 11b, 12a, 13a, and 21 slope with respect to the bottoms 10a and 10b is an angle between (i) a surface of each of the walls 11a, 11b, 12a, 13a, and 21 which surface does not make contact with a material such as the reinforcing fiber base material and (ii) the bottoms 10a and 10b. That is, an angle between (i) a surface of each of the walls 11a, 11b, 12a, 13a, and 21 which surface makes contact with a material such as the reinforcing fiber base material and (ii) the bottoms 10a and 10b can be an obtuse angle. Note that a part of the wall 21 which part has a height that is equal to the distance from the bottoms 10a and 10b to the top surfaces 11c, 12b, and 13b is referred to as a lower portion 21a, whereas another part of the wall 21 which part is located higher than the top surfaces 11c, 12b, and 13b is referred to as an upper portion 21b.

As such, the lower mold 3 of the preform mold includes: the bottom 10a (10b) that includes the corner 31 (33) when seen in plan view; the wall 11a (11b) that extends upward from one side edge (the other side edge) of the bottom 10a (10b); and the wall 21 (lower portion 21a) that extends upward from one end of the bottom 10a (10b).

The bottom 10a (10b) of the lower mold 3 further includes the corner 32 (34) which is other than the corner 31 (33). The wall 21 extends upward from one end of the bottom 10a (10b) between the corner 31 (33) and the corner 32 (34). The lower mold 3 further includes, at the other side edge (one side edge) of the bottom 10a (10b), the wall 12a (13a) that extends upward on the opposite side of the corner 32 (34) from the wall 21.

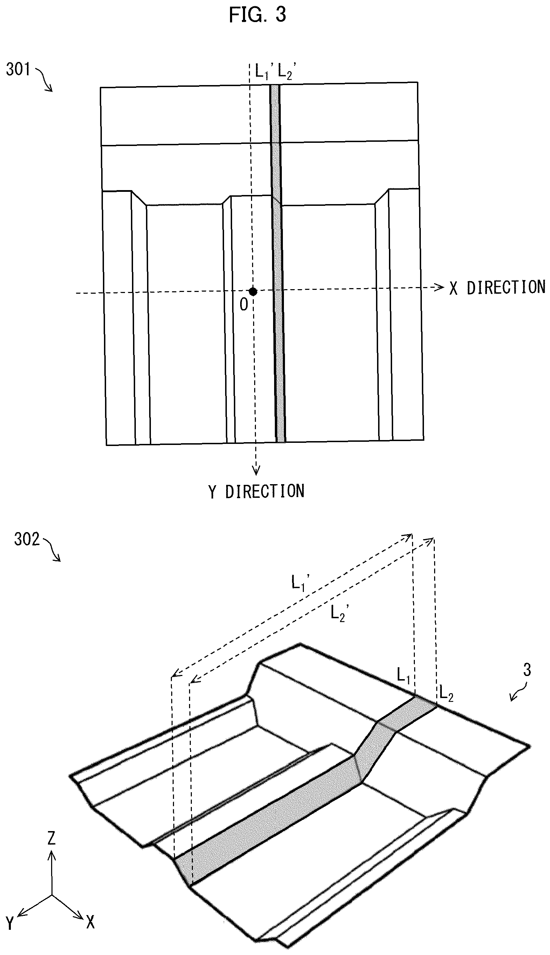

The following description will discuss in detail, with reference to Fig. 3, a position in which a parallel cut is formed. Fig. 3 is a view for describing a center and dimensions in a Y direction in a plan view of a preform mold in accordance with an embodiment of the present invention. Further, Fig. 3 is a view for describing dimensions of a three-dimensional shape in the Y direction in accordance with an embodiment of the present invention.

In Fig. 3, the reference numeral "301" indicates the lower mold 3 of the preform mold in a plan view of the lower mold 3. That is, the reference numeral "301" indicates a planar shape of the lower mold. In Fig. 3, the reference numeral "302" indicates the lower mold 3 of the preform mold when the lower mold 3 is viewed obliquely from above. That is, the reference numeral "302" indicates a three-dimensional shape of the lower mold. The planar shape corresponds to a two-dimensional figure obtained by projecting surfaces (surfaces which cause the reinforcing fiber base material to undergo deformation) of the mold (in Fig. 3, the preform mold), which surfaces make contact with the reinforcing fiber base material and/or a material other than the reinforcing fiber base material, onto a plane so as to maximize a projected area of the surfaces of the mold which surfaces make contact with the reinforcing fiber base material and/or the material other than the reinforcing fiber base material. A direction in which the surfaces of the mold which surfaces make contact with the reinforcing fiber base material and/or the material other than the reinforcing fiber base material is projected onto a plane is defined as a Z direction. The Z direction is a direction orthogonal to the surface of the sheet on which Fig. 3 is printed. A direction along a line segment that passes through a geometric center, which is indicated as "O", and that is shortest in the two-dimensional figure is defined as an X direction. A direction orthogonal to the X direction in the two-dimensional figure is defined as a Y direction. The center O is a geometric center of the lower mold 3. As illustrated in Fig. 3, the X direction is a shorter side direction of the planar shape, and the Y direction is a longer side direction of the planar shape. In a case where the mold includes, around a periphery of a surface which makes contact with a material to be preformed or molded, a portion which does not make contact with the material to be preformed or molded, the geometric center is a geometric center of a two-dimensional figure obtained by projecting the surfaces which make contact with the material to be preformed or molded.

In a case where the two-dimensional figure is highly symmetrical and there are a plurality of directions in which a line segment passing through the geometric center of the two-dimensional figure is shortest in the two-dimensional figure (for example, in a case where the two-dimensional figure is a square or a circle), any one of the directions is selected to be an X direction, and a direction orthogonal to the X direction is defined as a Y direction.

L₁' is represented by a straight line which, in the two-dimensional figure, extends in the Y direction and passes along a boundary between the top surface 11c and the wall 11a. L₁ represents a shortest line segment that lies on a surface of the lower mold 3 so as to extend parallel to the Y direction. L₁ is also referred to as a shortest line segment in the two-dimensional figure. l₁' represents the length of L₁'.

Note that L₁' only needs to be the foregoing shortest line segment. For example, L₁' can be a straight line which, in the two-dimensional figure, extends along the Y direction and passes through (i) the top surface 11c, (ii) the top surfaces 12b or 13b, or (iii) a boundary between the top surface 12b or 13b and the wall 12a or 13a.

L₁ represents a line segment which extends along the shape of the preform mold and corresponds to L₁'. l₁ represents the length of L₁ on the two-dimensional shape of the lower mold 3. l₁ is also referred to as a three-dimensional length of L₁'.

L₂ is a line segment which lies on a surface of the lower mold 3 so as to extend parallel to the Y direction. L₂' is represented by a straight line which, in the two-dimensional figure, extends in the Y direction and passes along the first side 41. l₂' represents the length of L₂'. A plane containing L₂ is parallel to a plane containing L₁. Shearing forces mean forces which are parallel to each other, are not coaxial with each other, and are exerted in opposite directions. Which one of the shearing forces is greater or smaller than the other can be easily determined by comparison based on a difference between the respective lengths of line segments extending along the mold parallel to each other or based on a ratio between the lengths.

L₂ represents a line segment which extends along the shape of the preform mold and corresponds to L₂'. l₂ represents the length of L₂ on the two-dimensional shape of the lower mold 3. l₂ is also referred to as a three-dimensional length of L₂'.

L₂' can be another line segment that extends in the same direction. For example, L₂' can be a straight line which, in the two-dimensional figure, extends parallel to the Y direction and passes through the bottom 10a.

The lower mold 3 is such that l₁ differs from l₂, and l₁' is equal to l₂'. As such, a ratio (l₁/l₁') of l₁ to l₁' differs from a ratio (l₂/l₂') of l₂ to l₂'. Thus, the lower mold 3 includes a zone in which these ratios differ from each other.

Further, the lower mold 3 is such that, when (i) the former and the latter are respectively referred to as a first ratio and a second ratio and (ii) L₂ can be set as appropriate, a portion between L₁ and L₂ in Fig. 3 includes a portion in which a rate of change from the first ratio to the second ratio increases as L₂ is increasingly distanced from L₁.

In the zone in which the ratio (l₁/l₁') of l₁ to l₁' differs from the ratio (l₂/l₂') of l₂ to l₂', an amount of deformation to be undergone by the reinforcing fiber base material in the form of a sheet varies among different positions on the reinforcing fiber base material. This results in occurrence of a shear deformation within the reinforcing fiber base material. Depending on the shape of the mold, a compressive deformation simultaneously occurs. However, in general, a sheet member made of the reinforcing fiber base material tends to have poor deformability and thus undergoes insufficient shear deformation. This results in a poor appearance of a zone which has been unable to conform to a desired shape. As such, a parallel cut is formed in a zone in which the ratio (l₁/l₁') of l₁ to l₁' differs from the ratio (l₂/l₂') of l₂ to l₂', in other words, in a portion (for example, the shaded portion in Fig. 3) of the reinforcing fiber base material between L₁ and L₂, which portion corresponds to the surfaces of the mold (in Fig. 3, the preform mold) which surfaces make contact with the reinforcing fiber base material and/or the material other than the reinforcing fiber base material. This makes it possible to improve shear deformation properties of the reinforcing fiber base material and thus increase conformity to the three-dimensional shape. Further, it becomes possible to improve preformability and obtain a preform having a good appearance. On the line segments L₁ and L₂, for example, (i) the length of a portion of the line segment L₁ which portion passes through the lower portion 21a and the wall 11a in Fig. 2 is different from the length of a portion of the line segment L₂ which portion passes through the lower portion 21a and the wall 11a, and (ii) the length of a portion of the line segment L₁ which portion passes through the top surface 22 is equal to the length of a portion of the line segment L₂ which portion passes through the top surface 22. In such a case, in a reinforcing fiber base material having a cut, the cut is formed preferably in a portion which is included in the portion between L₁ and L₂ and which corresponds to a portion constituting a part of the lower portion 21a and/or the wall 11a, because providing the cut in such a portion maximizes an effect of the cut.

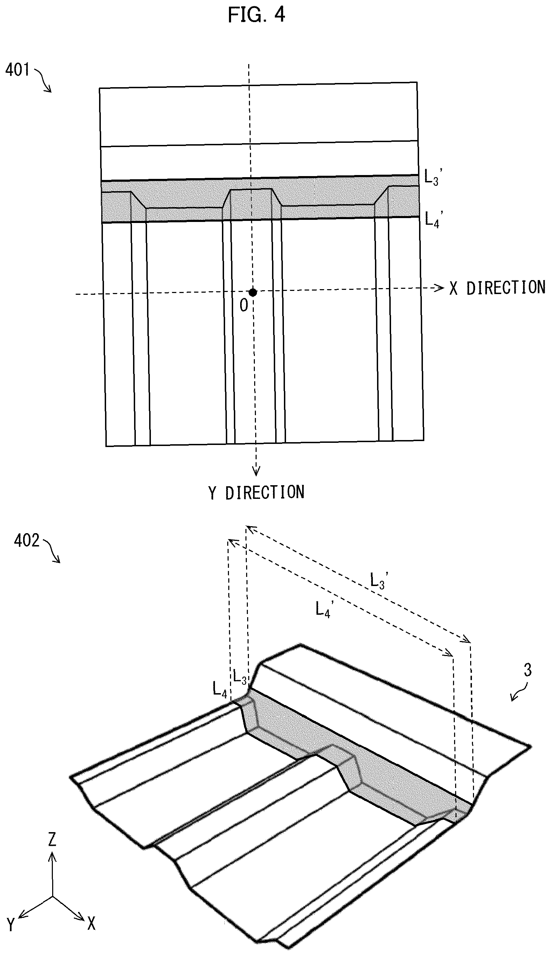

As described above, the position of a cut in a portion of a reinforcing fiber base material which portion extends along the Y direction can be identified according to l₁, l₂, and the like. The position of a cut in a portion of a reinforcing fiber base material which portion extends along the X direction can be identified similarly. The following description will discuss in detail, with reference to Fig. 4, a position in which a parallel cut is formed.

Fig. 4 is a view for describing a geometric center and dimensions in an X direction in a plan view of a preform mold and dimensions of a three-dimensional shape in the X direction in accordance with an embodiment of the present invention, the view schematically illustrating an example of a structure of a lower mold of the preform mold. In Fig. 4, the reference numeral "401" indicates a planar shape of the lower mold of the preform mold, and the reference numeral "402" indicates a three-dimensional shape of the lower mold.

L₃' is represented by a straight line which, in the two-dimensional figure, extends in the X direction and passes through the upper portion 21b. L3 represents a shortest line segment that lies on a surface of the lower mold 3 so as to extend parallel to the Y direction. L₃' is also referred to as a shortest line segment in the two-dimensional figure. l₃' represents the length of L₃'.

Note that L₃' only needs to be the foregoing shortest line segment. For example, L₃' can be a straight line which, in the two-dimensional figure, extends along the X direction and passes through the top surfaces 11c, 12b, and 13b. Alternatively, L₃' can be a straight line which passes through (i) the top surface 22, (ii) the top surfaces 12b or 13b, or (iii) a boundary between the upper portion 21b and the top surface 22.

L₃ represents a line segment which extends along the shape of the preform mold and corresponds to L₃'. l₃ represents the length of L₃ on the two-dimensional shape of the lower mold 3. l₃ is also referred to as a three-dimensional length of L₃'.

L₄ is a line segment which lies on a surface of the lower mold 3 and extends parallel to the X direction. L4' is represented by a straight line which, in the two-dimensional figure, extends in the X direction and traverses the bottoms 10a and 10b, the long protrusion 11, and the peripheral protrusions 12 and 13. l₄' represents the length of L₄'. A plane containing L₄ is parallel to a plane containing L₃.

L₄ represents a line segment which extends along the shape of the preform mold and corresponds to L₄'. l₄ is also referred to as a three-dimensional length of L₄'. l₄ represents the length of L₄ on the two-dimensional shape of the lower mold 3.

L₄' can be another line segment that extends in the same direction. For example, L₄' can be a straight line which, in the two-dimensional figure, extends parallel to the X direction and passes along the second sides 42 and 52.

The lower mold 3 is such that l₃ differs from l₄, and l₃' is equal to 14'. As such, a ratio (l₃/l₃') of l₃ to l₃' differs from a ratio (l₄/l₄') of 14 to 14'. Thus, the lower mold 3 has a zone in which these ratios differ.

Further, the lower mold 3 is such that, when (i) the former and the latter are respectively referred to as a third ratio and a fourth ratio and (ii) L₄ can be set as appropriate with respect to L₃, a portion between L₃ and L₄ in Fig. 4 includes a portion in which a rate of change from the third ratio to the fourth ratio increases as L₄ is increasingly distanced from L₃. The portion is, for example, a portion between L₃ and L₄ in a case where (i) L₃ is a straight line passing through the top surfaces 11c, 12b, and 13b in the two-dimensional figure and (ii) L₄ is a straight line passing along the second sides 42 and 52 in the two-dimensional figure.

In the zone in which the ratio (l₃/l₃') of l₃ to l₃' differs from the ratio (l₄/l₄') of l₄ to l₄', the reinforcing fiber base material undergoes shear deformation and/or compressive deformation. As such, a parallel cut is preferably formed in a zone in which the ratio (l₃/l₃') of l₃ to l₃' differs from the ratio (l₄/l₄') of l₄ to l₄', in other words, in a portion (for example, the shaded portion in Fig. 4) of the reinforcing fiber base material between L₃ and L₄, which portion corresponds to the surfaces of the mold (in Fig. 3, the preform mold) which surfaces make contact with the reinforcing fiber base material and/or the material other than the reinforcing fiber base material. Forming the parallel cut in the above portion makes it easier for the reinforcing fiber base material having the parallel cut to undergo shear deformation and/or compressive deformation. Thus, it is preferable to form the parallel cut in the above portion in terms of obtaining a preform having a good appearance. The line segments L₃ and L₄ are such that, for example, (i) in a portion in which L₄ passes through the long protrusion 11, the peripheral protrusion 12, the peripheral protrusion 13, and the lower portion 21a in Fig. 2, there is a part where the length l₄ of L₄ differs from that in other parts and (ii) in a portion in which L₃ passes through the upper portion 21b, there is a part where L₃ has a constant length l₃. In such a case, in a reinforcing fiber base material having a cut, the cut is formed preferably in a portion which is included in the portion between L₃ and L₄ and which corresponds to a portion constituting the lower portion 21a, because providing the cut in such a portion maximizes an effect of the cut.

One of the causes of a poor appearance can be a case in which a planar sheet member having a two-dimensional shape includes a portion whose area after deformation into a three-dimensional shape with use of a mold is smaller than an area of the portion before the deformation with use of the mold. That is, a case in which the planar sheet member includes a portion which undergoes compressive deformation during the deformation with use of the mold. In a case where the area decreases during the deformation with use of the mold, the sheet member does not fit in the shape and bends in an out-of-plane direction. This results in a poor appearance. As such, in a case where a portion of the reinforcing fiber base material which portion has a cut substantially parallel to the orientation direction of the reinforcing fibers differs in area from a portion of the preform mold which portion corresponds to the portion of the reinforcing fiber base material, a parallel cut is formed in a zone (a portion of the reinforcing fiber base material) which undergoes compressive deformation. This allows a part of the reinforcing fiber base material to overlap with another part of the reinforcing fiber base material, and increases the degree of freedom in deformation of the reinforcing fiber base material, so that the reinforcing fiber base material undergoes deformation. This makes it possible to let an excess part of the sheet member to escape. Thus, forming a parallel cut in the above zone is more preferable in terms of obtaining a preform having a good appearance.

### (Amount of shear deformation)

Although depending on the type of a reinforcing fiber base material, the amount of shear deformation is preferably not more than a maximum amount of deformation of a reinforcing fiber base material having a parallel cut, in terms of reducing fiber meandering. The amount of shear deformation is preferably not less than 1°. The amount of shear deformation is preferably not more than 60°. The amount of shear deformation has a lower limit of preferably not less than 3°, and more preferably not less than 5°. The amount of shear deformation has an upper limit of preferably not more than 45°, and more preferably not more than 30°. In a case where the amount of shear deformation is not less than the above lower limit, the parallel cut can sufficiently exhibit the effect of improving the shear deformation properties of the reinforcing fiber base material. In a case where the amount of shear deformation is not more than the above upper limit, it is possible to reduce fiber meandering and a wrinkle of the preform.

### (Amount of compressive deformation)

In terms of preventing bending in an out-of-plane direction of the sheet member, the amount of compressive deformation is such that, in a case where the prepreg is a unidirectional prepreg (described later), an area of the prepreg before compressive deformation is preferably not less than 70%, more preferably not less than 80%, and even more preferably not less than 90% of an area of the prepreg after the compressive deformation. That is, a rate of change from the area before the compressive deformation to the area after the compressive deformation is preferably not more than 30%, more preferably not more than 20%, and even more preferably not more than 10%. In a case where the rate of change is not less than the lower limit, it is possible to let an excess part of the sheet member to escape by the parallel cut.

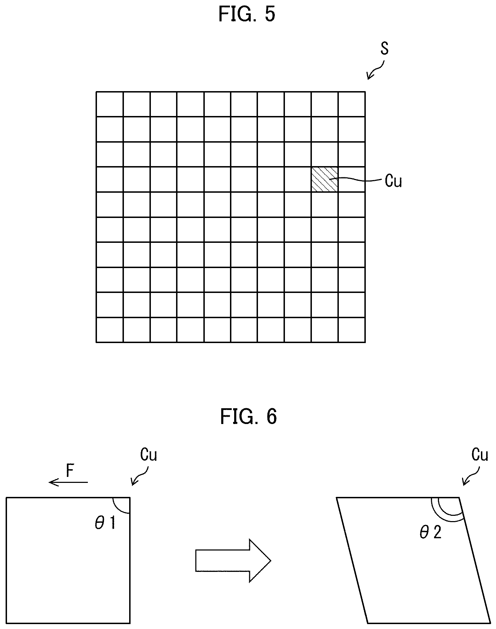

It is noted here that the amount of shear deformation in the reinforcing fiber base material can be measured in the following manner. Fig. 5 is a view for describing measurement of the amount of deformation of a reinforcing fiber base material in accordance with an embodiment of the present invention. Fig. 6 schematically illustrates (i) the shape of a cell of a grid pattern in the sample in Fig. 5 before shear deformation of the sample and (ii) the shape of the cell after the shear deformation of the sample.

First, a sample S of a reinforcing fiber base material having cells Cu arranged in the form of a grid as shown in Fig. 5 is prepared. The shape of the sample S in plan view and the shape of each cell Cu of the grid in plan view are both rectangle. An angle θ1 in the cell Cu is, for example, 90° as illustrated in Fig. 6.

Next, at least edges including a pair of opposite sides of the sample S are held by respective jigs. Next, a force in a shear direction (for example, a force in the direction indicated by arrow F in Fig. 6) is applied to each jig, and thereby the shape of the sample S in plan view is deformed. With this, an angle θ2 of a corner of the cell Cu becomes greater than 90° as illustrated in Fig. 6, for example. The angle θ2 here is the angle after deformation. The amount of deformation need only be expressed so that the amount of change from the original angle is understandable. For example, the amount of deformation can be expressed by the absolute value of the difference from the original angle (θ1=90°). The amount of deformation immediately before a wrinkle occurs in the sample S is defined as the maximum deformation amount.

The amount of compressive deformation can be found by drawing cells in the form of a grid on the reinforcing fiber base material, obtaining images of the reinforcing fiber base material before and after preforming, and processing the images with use of commercially available image processing software to calculate a change in area. A value in percentage indicating a decrease from an area before the preforming to an area after the preforming is used as the amount of compressive deformation.

### (Dimensions and arrangement of parallel cut)

A parallel cut is formed substantially parallel to an orientation direction of reinforcing fibers. In terms of increasing the shear deformation properties of a reinforcing fiber base material, the parallel cut has a length of preferably not less than 0.5% of a surface length of a preform which surface length is a length of a portion where the reinforcing fiber base material makes contact with the preform during deformation with use of the mold and which surface length is longest in the orientation direction on the three-dimensional shape of the preform mold. The length of the parallel cut is more preferably not less than 1.0%, and even more preferably not less than 1.5% of the surface length. In terms of shape retainability of the reinforcing fiber base material, the length of the parallel cut is preferably not more than 90%, more preferably not more than 80%, and even more preferably not more than 70%. A material to be preformed or molded, such as a reinforcing fiber base material, is often used in a size substantially the same as the size of the mold, in order to reduce waste. As such, it is preferable to define the length of the parallel cut with respect to the size of the mold as described above. In a case of using a plurality of reinforcing fiber base materials which differ in orientation direction of reinforcing fibers and each of which has a parallel cut, it is preferable that the length of the parallel cut be substantially identical among the layers, in terms of ease in designing the length of the cut.

Further, parallel cuts which are substantially in a single straight line may be continuous with each other, that is, may be not spaced apart from each other, or may be spaced apart from each other. In a case where the cuts are continuous with each other, it is preferable that ends of the cuts are integrated with each other, in terms of handleability of the reinforcing fiber base material. The interval between the parallel cuts can be regular or can be irregular.

In a case where the parallel cuts are spaced apart from each other, that is, in a case where the plurality of parallel cuts are substantially in a single straight line in the orientation direction of the reinforcing fibers, setting the interval between the parallel cuts in the orientation direction to be regular increases the efficiency of designing and preparing the parallel cuts. In terms of increasing the deformation properties of the reinforcing fiber base material by the parallel cuts, the interval is preferably not less than 0.5%, more preferably not less than 1.0%, and even more preferably not less than 1.5% of the surface length. In terms of retaining the sheet shape, the interval is preferably less than 80%, more preferably less than 70%, even more preferably not less than 60%, and particularly preferably less than 50% of the surface length. In a case of forming parallel cuts only in a portion of the reinforcing fiber base material which portion is to undergo a large amount of deformation (for example, only in a portion where the amount of deformation is greater than a maximum amount of deformation of the reinforcing fiber base material before the parallel cuts are formed), the parallel cuts can be provided in the above proportion on the basis of the length of the portion in the Y direction.

Further, the interval between the parallel cuts in a direction orthogonal to the orientation direction is preferably not more than 75% and more preferably not more than 50% of a dimension of a zone of the material such as the reinforcing fiber base material in the direction orthogonal to the orientation direction, which zone (i) is included in a zone that makes contact with the preform mold during deformation with use of the mold and (ii) corresponds to a part where the dimensions of the three-dimensional shape of the preform mold differs from the dimensions of a two-dimensional shape obtained by projecting the preform mold onto a plane. The interval is preferably not less than 5%, and more preferably not less than 10%. In a case where the interval is not more than the above upper limit, it is possible to sufficiently increase the amount of shear deformation and/or the amount of compressive deformation of the reinforcing fiber base material. In a case where the interval is not less than the above lower limit, it is possible to stably form the parallel cuts in the reinforcing fiber base material. In a case where the length of the above part in the direction orthogonal to the fibers varies in the orientation direction of the fibers, the parallel cuts can be provided at the above proportion on the basis of a maximum value of the length.

From another viewpoint, when a two-dimensional figure is obtained by projecting a surface of a mold such as the preform mold onto a plane so as to maximize a projected area of the surface of the mold, which surface makes contact with a material such as a reinforcing fiber base material, the cut in the reinforcing fiber base material has a length of not less than 0.5%, preferably not less than 0.8%, and even more preferably not less than 1.0% of l₅', where a length of a longest line segment L₅' that is parallel to the orientation direction of the reinforcing fibers in the two-dimensional figure is l₅'. The length of a parallel cut in the Y direction is preferably less than 100%, more preferably not more than 90%, and even more preferably not more than 80% of l₅', in terms of not dividing up the sheet. L₅' represents a longest line segment that lies on a surface of the lower mold 3 so as to extend parallel to the orientation direction of the reinforcing fibers. l₅' represents the length of L₅'. In Fig. 3, l₁' is equal to l₅'. In terms of increasing the deformation properties of a reinforcing fiber base material by a parallel cut and in terms of sheet shape retainability, it is preferable that a proportion of the length of the parallel cut with respect to l₅' be in the above range, and it is more preferable that a proportion of a longest surface length on a three-dimensional shape of the preform mold in the orientation direction be in the above range.

An interval in an orientation direction of reinforcing fibers refers to an interval between adjacent parallel cuts in the orientation direction. Note here that "adjacent cuts" means cuts one of which is located the closest to the other in the orientation direction. That is, the cut and the another cut are substantially in a single straight line. In terms of increasing an efficiency of a step of forming parallel cuts in the reinforcing fiber base material, the interval in the orientation direction is preferably not less than 0.5%, more preferably not less than 0.8%, and even more preferably not less than 1.0% of l₅'. In terms of increasing the deformation properties of the reinforcing fiber base material by parallel cuts and in terms of sheet shape retainability, the interval between the parallel cuts in the Y direction is preferably less than 70%, more preferably not more than 40%, and even more preferably not more than 25% of l₅'. In a case of forming parallel cuts only in a portion of the reinforcing fiber base material which portion is to undergo a large amount of deformation (for example, only in a portion where the amount of deformation is greater than a maximum amount of deformation of the reinforcing fiber base material before the parallel cuts are formed), the parallel cuts can be provided in the above proportion on the basis of the length of the portion in the Y direction.

An interval between the cuts in a direction orthogonal to the orientation direction of the reinforcing fibers refers to an interval between parallel cuts which are adjacent in the direction orthogonal to in the orientation direction of the reinforcing fibers. Note here that "adjacent cuts" means cuts one of which is located the closest to the other in the direction orthogonal to the orientation direction. The interval in the direction orthogonal to the orientation direction is preferably set such that, in a case where the reinforcing fibers contained in the reinforcing fiber base material are oriented in the X direction, the interval is set on the basis of a shortest distance between L₃ and L₄, and in a case where the reinforcing fibers contained in the reinforcing fiber base material are oriented in the Y direction, the interval is set on the basis of a shortest distance between L₁ and L₂. In terms of increasing the efficiency of a step of forming parallel cuts in the reinforcing fiber base material, the interval in the direction orthogonal to the orientation direction is preferably not less than 10%, more preferably not less than 15%, and even more preferably not less than 20% of the shortest distance between L₃ and L₄, in a case where the reinforcing fibers included in the reinforcing fiber base material are oriented in the X direction. In terms of effectively causing the reinforcing fiber base material having the parallel cuts to undergo shear deformation and/or compressive deformation, the interval in the direction orthogonal to the orientation direction is preferably not more than 70%, more preferably not more than 60%, and even more preferably not more than 50% of the distance. Similarly, the interval in the direction orthogonal to the orientation direction is preferably not less than 10%, more preferably not less than 15%, and even more preferably not less than 20% of the shortest distance between L₁ and L₂, in a case where the reinforcing fibers included in the reinforcing fiber base material are oriented in the Y direction. In terms of effectively causing the reinforcing fiber base material having the parallel cuts to undergo shear deformation and/or compressive deformation, the interval in the direction orthogonal to the orientation direction is preferably not more than 70%, more preferably not more than 60%, and even more preferably not more than 50% of the distance. The shortest distance between L₃ and L₄ is a minimum value of the distance between two points which are on the respective line segments L₃ and L₄. The shortest distance between L₁ and L₂ is a minimum value of the distance between two points which are on the respective line segments L₁ and L₂. Instead of the shortest distance between L₁ and L₂ or the shortest distance between L₃ and L₄, a shortest distance between L₁' and L₂' or the shortest distance between L₃' and L₄' can be used to set the interval between the cuts within a similar numerical range.

In a case where the orientation direction of the reinforcing fibers is neither the X direction nor the Y direction, the interval is set within the foregoing numerical range on the basis of any of the shortest distance between L₁ and L₂, the shortest distance between L₃ and L₄, the shortest distance between L₁' and L₂', and the shortest distance between L₃' and L₄', in order to make it easier to design the interval between the cuts. Similarly, the length of each parallel cut and the interval between the parallel cuts in the orientation direction of the reinforcing fibers can also be set within the foregoing numerical range on the basis of l₂ or l₂', or l₄ or l₄'.

In a case where parallel cuts satisfying the above conditions are added to the reinforcing fiber base material, reinforcing fiber meandering after the preforming into a three-dimensional shape is reduced, so that a meandering width of the reinforcing fibers can be reduced to not more than 2 mm. Reinforcing fiber meandering refers to a state in which some of the reinforcing fibers in the reinforcing fiber base material in a produced preform are oriented in a direction intersecting the orientation direction in the reinforcing fiber base material. A meandering width refers to a distance, in the direction orthogonal to the orientation direction, between (i) the position of a portion of a reinforcing fiber in a state where the portion has undergone meandering and (ii) the position of the portion (the position in the orientation direction) in a state where the portion has not undergone meandering. The distance can be a value which appropriately represents the degree of meandering, and can be an average value or a maximum value. Reducing the meandering increases the strength and appearance of a molded article.

### (Laminate)

A reinforcing fiber base material having a parallel cut can be used in the form of a laminate in which two or more reinforcing fiber base materials, each having a parallel cut, are stacked together. The number of reinforcing fiber base materials to be used in the laminate can be selected as appropriate in accordance with a demanded thickness of a molded article. The laminate can include a reinforcing fiber base material other than the reinforcing fiber base material having a parallel cut.

The number of laminates to be preformed can be selected as appropriate in accordance with a demanded thickness of a molded article. For example, in a case where the molded article is required to have a thickness of a stack of five or more laminates, a plurality of preforms are preferably prepared by carrying out, a plurality of times, a step of preforming a single laminate or preforming a stack of one or two to four laminates. In a case where one or two to four laminates are to be preformed in the preforming step carried out once, it is possible to more efficiently preform the laminate(s).

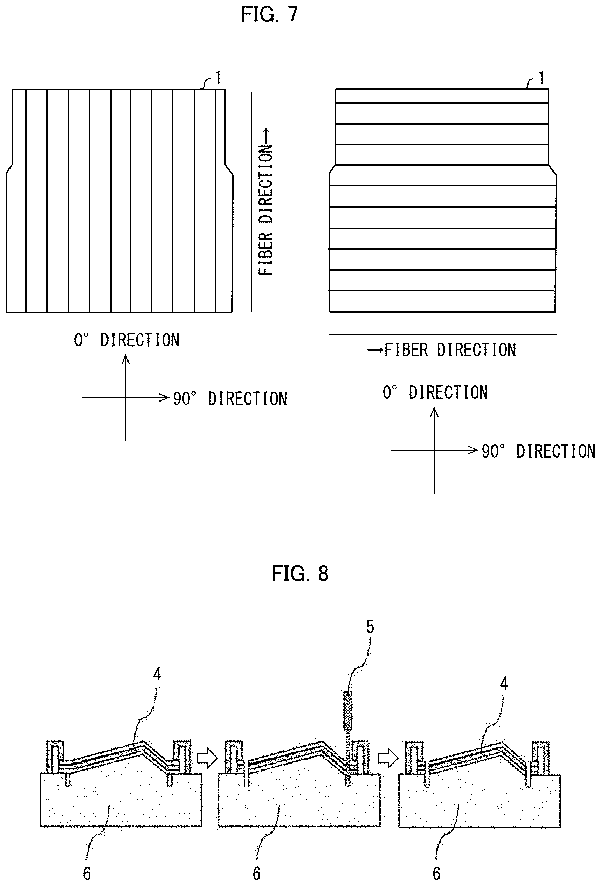

In a case where the reinforcing fibers contained in the reinforcing fiber base materials are continuous filaments, the reinforcing fiber base materials can be stacked and then used so that, for example, as illustrated in Fig. 7, orientation directions of the reinforcing fibers contained in the reinforcing fiber base materials are different from each other when viewed in a direction in which the reinforcing fiber base materials are stacked together. Fig. 7 is a view schematically illustrating a prepreg sheet in which fibers are oriented at 0° and a prepreg sheet in which fibers are oriented at 90°. When the reinforcing fiber base materials are stacked together, the reinforcing fibers contained in the reinforcing fiber base materials do not need to intersect each other at 90° when the reinforcing fiber base materials are viewed from above.

A laminate, in which the reinforcing fiber base materials are stacked together in the form of pseudo-isotropic lamination, can be used. The pseudo-isotropic lamination means that in a case where anisotropic materials, particularly reinforcing fibers contained in a reinforcing fiber base material, are continuous filaments and are oriented unidirectionally, n (n≥3) layers are stacked together by rotating the orientation direction of the reinforcing fibers by (360/n)°. The reinforcing fiber base materials can be stacked together in the form of orthogonal lamination. The orthogonal lamination means a lamination structure in which, in a case where anisotropic materials, particularly reinforcing fibers contained in a reinforcing fiber base material, are continuous filaments and are oriented unidirectionally, a plurality of reinforcing fiber base materials are stacked together so that the reinforcing fibers are oriented so as to intersect at right angles (-90° or 90°).

Specifically, for example, a first reinforcing fiber base material and a second reinforcing fiber base material that are stacked together can be preformed so that the reinforcing fibers contained in the reinforcing fiber base materials are oriented at 45° or 135°. It is possible to form, for example, a pseudo-isotropic lamination such as [0°/45°/90°/-45°/0°] by thus stacking the reinforcing fiber base materials. In a case where the reinforcing fiber base materials are thus stacked together, it is possible to design the fiber-reinforced composite material molded article that is highly isotropic, or the fiber-reinforced composite material molded article that has a high strength in any direction.

Examples of a method of obtaining a preform by preforming the reinforcing fiber base material include the following three methods. The preform can be obtained by a method other than the methods below.

(i) A method in which the laminate (described earlier) is manually stuck into the mold, so that a preform is manufactured by preforming the laminate.
(ii) A method in which the laminate is provided on the mold, a rubber film or the like is provided on top of the laminate, and then the rubber film is pressure-bonded to the laminate by vacuuming the inside of the mold, so that a preform is manufactured by preforming the laminate.
(iii) A method in which a preform mold having an upper mold and a lower mold are provided in a simple molding machine, the laminate is provided between the upper and lower molds that are open, and the laminate is preformed by compressing the upper and lower molds, so that a preform is manufactured.

The preforming can be carried out by any one of the above three methods, or by a method obtained by combining, as appropriate, two or more of the above three methods. The preforming step is preferably the method (iii). This is because the method (iii) makes it possible to preform the laminate in a short time even in a case where the laminate has a large shape.

The temperature in preforming, although depending on the makeup of the matrix resin composition, is preferably approximately 60°C to 80°C at which the matrix resin composition is softened. Preforming while heating makes it possible to improve the conformity to the mold.

The pressure in preforming is preferably 0.01 MPa to 0.05 MPa in terms of conformity to a shape. In a case where the pressure is in the above range, the base material sufficiently conforms to the mold. Further, the preform mold does not receive an excessive load.

A preforming time is preferably not less than 10 seconds, and more preferably not less than 20 seconds. The preforming time is preferably not more than 60 seconds, and more preferably not more than 40 seconds.

In a case where the preforming time is not less than the above lower limit, it is possible to sufficiently cool the prepreg which has been heated, and thus prevent the prepreg from having a disrupted shape and fiber orientation by sticking to the mold. In a case where the preforming time is not more than the above upper limit, it is possible to shorten a time necessary for the step, and thus carry out a molding cycle efficiently.

### <Other steps>

### (Preheating step)

The preheating step is a step of preheating a prepreg sheet before the preforming step. This causes a modest reduction in viscosity of a matrix resin, so that a preforming operation can be easily carried out in the preforming step to be carried out after the preheating step. This makes it possible to excellently manufacture the preform in the preforming step to be carried out after the preheating step.

The preheating step is carried out at a temperature at which the thermosetting matrix resin used in the prepreg sheet is not cured. For example, the prepreg sheet is preferably preheated so as to have a temperature of 40°C to 80°C. A preheating temperature that is set to a temperature higher than or equal to 40°C tends to make it possible to render the matrix resin sufficiently moldable in a case where, for example, an epoxy resin is used as the thermosetting matrix resin. In addition, a preheating temperature that is set to a temperature lower than or equal to 80°C makes it possible to maintain viscosity of the matrix resin at a moderate level. In addition, the preheating temperature that is set to a temperature lower than or equal to 80°C tends to make it possible to, without causing any disorder of fibers of the preform in the preforming step to be carried out after the preheating step, finally obtain the fiber-reinforced composite material molded article that is excellent in mechanical property.

Examples of the preheating step include a method of applying hot air to the prepreg sheet, a method of irradiating the prepreg sheet with an infrared ray, and a method of providing the prepreg sheet on a heated plate. The prepreg sheet is preferably preheated by infrared-ray irradiation because the infrared-ray irradiation (i) allows the prepreg sheet to be preheated in a short time and (ii) makes it easy to handle the prepreg sheet that has been preheated.

### (Cutting step)

A cutting step of cutting the reinforcing fiber base material or the preform into a desired shape can be carried out before the preforming step or before the molding step. In a case where the cutting step is carried out, it is possible to allow the shape (in particular, dimensions) of the preform to be a net shape (dimensions) of a desired shape of the molded article.

In the cutting step to manufacture the preform whose shape is a net shape (dimensions) of the molded article, it is possible to, for example, cut the reinforcing fiber base material into a planar developed shape, which is a desired shape for the molded article. By preforming the reinforcing fiber base material thus cut, it is also possible to manufacture the preform whose shape is a net shape (dimensions) of the molded article.

Alternatively, after the preform whose shape is a near net shape (dimensions) of the molded article is manufactured by preforming the reinforcing fiber base material, an excess part of the preform can be cut. By thus carrying out the cutting, it is also possible to manufacture the preform whose shape is a net shape (dimensions) of the molded article.

The cutting step is preferably carried out after the preforming step and before the molding step because the cutting step allows a preform to be obtained to have higher dimensional accuracy. In order to manufacture the preform whose shape is a net shape (dimensions) of the molded article, it is preferable to cut the preform whose shape is a near net shape (dimensions) of the molded article.

The cutting step can be carried out, for example, automatically with use of a cutting device such as an ultrasonic cutter illustrated in Fig. 8, or manually with use of a trimming jig illustrated in Fig. 8, scissors, a cutter, or the like.

### (Compacting step)

By carrying out a compacting step of compacting the laminate, it is possible to remove air remaining between the reinforcing fiber base materials in the laminate. This makes it possible to manufacture a laminate containing less voids.

The laminate is preferably compacted by a method that prevents the reinforcing fibers in the reinforcing fiber base material from meandering. Examples of such a compacting method include a method in which the reinforcing fiber base material is provided on a flat tool, an elastic sheet such as a rubber film is provided on top of the reinforcing fiber base material, and then the rubber film is pressure-bonded, by carrying out vacuuming from the reinforcing fiber base material side. The compacting step removes air remaining between the reinforcing fiber base materials.

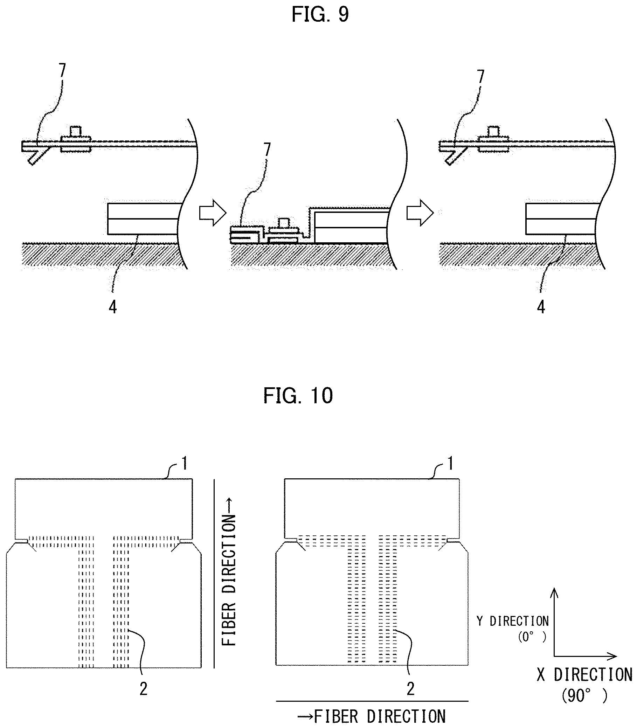

The compacting step can be carried out with use of, for example, a debulking device illustrated in Fig. 9. The compacting step will be described below with reference to Fig. 9.

Fig. 9 is a view describing the compacting step of the method for manufacturing the preform in accordance with the present embodiment. The laminate is carried onto a flat workbench as illustrated in Fig. 9. Next, the laminate is covered with the debulking device (for example, a T-7 seal system manufactured by TORR SCIENCE CO., Ltd.). Subsequently, the laminate is compacted by using a vacuum pump to cause the inside of the debulking device to be in a state of reduced pressure. The state of reduced pressure is formed by, for example, setting a vacuum pressure to 700 mmHg and maintaining the vacuum pressure for 5 minutes. Then, an internal pressure of the debulking device is returned to an atmospheric pressure, so that the laminate that has been compacted is obtained.

### <Method for manufacturing reinforcing fiber base material having parallel cut>

### (Parallel cut forming step)

As means of forming a cut parallel to the orientation direction of the fibers in the reinforcing fiber base material, it is of course possible to use a method in which the cut is formed automatically with use of the ultrasonic cutter illustrated in Fig. 8, a cutting plotter, a rotary blade roller, laser irradiation, or the like, and it is also possible to use a method in which the cut is formed manually with use of a cutting device, scissors, a cutter, or the like. The means of forming a cut is not limited to a cutting tool, provided that the means is capable of forming the cut in a thickness direction of the reinforcing fiber base material. Since it becomes difficult to continuously form cuts of a resin adheres to the cutting tool, it is preferable to form a cut from the side where a protection film is provided.

Further, it is more preferable that a prepreg having cuts be manufactured by forming parallel cuts in the reinforcing fiber base material simultaneously with the cutting step (described later) of cutting the reinforcing fiber base material, in terms of simplifying the process.

The obtained prepreg having cuts is used such that, in order to obtain a preform having a desired thickness, a laminate in which one or more prepregs are stacked is placed in the preform mold and preformed to obtain the preform. Heat and pressure are applied to the preformed preform, thereby obtaining a molded article. In a case of using the laminate, one or more prepregs are used. One or more reinforcing fiber base materials other than a reinforcing fiber base material having parallel cuts can be used by being stacked in the laminate together with the one or more prepregs.

### (Reinforcing fiber base material)

The reinforcing fiber material is a sheet-like or tape-like base material that is made of many reinforcing fibers. For convenience, the reinforcing fiber material that is relatively wide is referred to as a "sheet", and the reinforcing fiber material that is relatively narrow is referred to as a "tape". Note, however, that the reinforcing fiber base material is not limited in size and can be cut in accordance with the size of a molded article. Alternatively, a plurality of reinforcing fiber base materials can be combined and used. In the manufacturing of a fiber-reinforced composite material molded article, the fiber-reinforced composite material molded article is obtained by causing a reinforcing fiber base material to undergo deformation with use of a mold.

Examples of a form of the reinforcing fiber base material include a form (unidirectional material) in which continuous fibers are unidirectionally aligned, a fabric form (cloth material) obtained by weaving continuous fibers, and a form in which reinforcing fibers are not woven.

A form of a unidirectional material in which continuous filaments are used and a form of a cloth material are preferable in order to achieve higher physical properties after molding.

The reinforcing fiber base material can be used such that one type of reinforcing fiber base material is used alone, or such that two or more types of reinforcing fiber base materials can be used in combination.

As a reinforcing fiber base material having a parallel cut in accordance with an embodiment of the present invention, a reinforcing fiber base material is used which contains reinforcing fibers unidirectionally oriented and a matrix resin composition and which has a parallel cut, in terms of minimizing the cutting through of the reinforcing fibers and using them as continuous filaments for improving the strength of a molded article. At least one of the reinforcing fibers has the parallel cut in a zone which is to undergo shear deformation and/or compressive deformation. In the manufacturing of a preform or a molded article in accordance with an embodiment of the present invention, at least one reinforcing fiber base material is used which contains reinforcing fibers unidirectionally oriented and a matrix resin composition and which has a parallel cut. In this case, a reinforcing fiber base material different from the reinforcing fiber base material having the parallel cut can be used in combination.

### (Thickness of reinforcing fiber base material)

The reinforcing fiber base material has a thickness that is not particularly limited but is preferably within a range of 0.03 mm to 6 mm. The sheet that has a thickness of not less than 0.03 mm allows a preform to have excellent shape retainability. The thickness of the sheet has a lower limit of more preferably not less than 0.2 mm, and even more preferably not less than 0.4 mm. In addition, the sheet that has a thickness of not more than 6 mm allows a preform to have excellent preformability and allows a reduction in occurrence of a wrinkle in a molded article to be obtained. The thickness of the sheet has an upper limit of more preferably not more than 5 mm, and even more preferably not more than 4 mm.

### (Total area weight (TAW) of reinforcing fiber base material)

In terms of the workability, operation efficiency, and strength of a fiber-reinforced composite material in which a preform in accordance with an embodiment of the present invention is used, the weight (unit: gsm) of the reinforcing fiber base material per m² is preferably not less than 50 gsm, more preferably not less than 100 gsm, and even more present invention not less than 150 gsm. Similarly, in terms of achieving light weight, the weight of the reinforcing fiber base material per m² is preferably not more than 350 gsm, more preferably not more than 300 gsm, and even more preferably not more than 250 gsm.

Note that gsm represents g/m², and refers to a weight per unit area.

### (Reinforcing fiber)

The reinforcing fibers can be reinforcing fibers used for an ordinary fiber-reinforced composite material. The reinforcing fibers can be selected as appropriate in accordance with a purpose for which a prepreg sheet is to be used, such as desired physical properties of a fiber-reinforced composite material molded article (described later).

The thickness of the reinforcing fiber, in terms of filament diameter, is preferably within the range of 1 µm to 20 µm, more preferably within the range of 3 µm to 10 µm. The reinforcing fibers that have a thickness of not more than 20 µm are preferable in terms of an increase in tensile strength and in tensile elastic modulus. The reinforcing fibers that have a thickness of not less than 1 µm allow (i) an increase in productivity of the reinforcing fiber bundle and (ii) a reduction in manufacturing cost.

The reinforcing fibers can be of a single kind or can be of two or more kinds. Examples of the reinforcing fiber include glass fiber, carbon fiber, aramid fiber, high strength polyester fiber, boron fiber, alumina fiber, silicon nitride fiber, and nylon fiber. Note that carbon fiber includes graphite fiber.

Among those listed above, carbon fiber is preferred because carbon fiber is lightweight, has high strength, and has high elastic modulus and also is superior in heat resistance and chemical resistance. Examples of the type of carbon fiber include pitch-based carbon fiber, polyacrylonitrile (PAN)-based carbon fiber, and rayon-based carbon fiber. Any of these types of carbon fiber may be used. PAN-based carbon fiber is more preferred in terms of the productivity of the carbon fiber.

Further, approximately 0.01 mass% to 5 mass% of a substance having a predetermined functional group can be attached to the carbon fibers in terms of convergence of a carbon fiber bundle or in terms of an improvement in adhesion between the carbon fibers and a thermosetting resin during manufacturing of the fiber-reinforced composite material molded article. Examples of the predetermined functional group include epoxy group, hydroxyl group, amino group, carboxyl group, carboxylic acid anhydride group, acrylate group, and methacrylate group.

The carbon fibers that are high-strength carbon fibers are suitable for development of strength of a fiber-reinforced composite material. The high-strength carbon fibers have (i) a strand tensile strength of not less than 4 GPa, and preferably not less than 4.6 GPa and (ii) a tensile elongation of not less than 1.5%. Note here that the strand tensile strength refers to a strength measured by a strand tensile test that is carried out based on JIS R7601(1986).

### (Matrix resin composition)

The matrix resin composition contains a matrix resin and another component. The matrix resin is not limited to any particular matrix resin. As the matrix resin, a thermoplastic resin and/or a thermosetting resin can be used.

In the following description, the matrix resin composition in which a thermoplastic resin is used as the matrix resin is referred to as a thermoplastic resin composition, and the matrix resin composition in which a thermosetting resin is used as the matrix resin is referred to as a thermosetting resin composition. The thermosetting resin composition contains a thermosetting resin and, as another component, a curing agent.

The thermoplastic resin is in a highly viscous liquid state by being heated, and can be freely deformed by an external force. In a case where the external force is removed by cooling the thermoplastic resin, the thermoplastic resin is in a solid state, and maintains its shape. This process can be repeated. The thermoplastic resin is not particularly limited, and can be selected as appropriate, provided that the thermoplastic resin does not cause any serious deterioration in mechanical property that a molded article is required to have. Examples of the thermoplastic resin that can be used include polyolefin-based resins such as a polyethylene resin and a polypropylene resin, polyamide-based resins such as a nylon 6 resin and a nylon 6,6 resin, polyester-based resins such as a polyethylene terephthalate resin and a polybutylene terephthalate resin, a polyphenylene sulfide resin, a polyether ketone resin, a polyether sulfone resin, and an aromatic polyamide resin. Among the above resins, a polyamide resin, a polypropylene resin, or a polyphenylene sulfide resin is preferable in terms of physical properties and/or a price. One type of such resin can be used alone, or two or more types of such resins can be used in combination.

A thermosetting resin is a reactive polymer which, under the action of heat or a catalyst, undergoes a curing reaction through intermolecular crosslinking and forms an insoluble, infusible three-dimensional network. The thermosetting resin is also not particularly limited, and can be selected as appropriate, provided that the thermosetting resin does not cause any serious deterioration in mechanical property that a molded article is required to have. Examples of the thermosetting matrix resin include an epoxy resin, an unsaturated polyester resin, an acrylic resin, a vinyl ester resin, a phenolic resin, a phenoxy resin, an alkyd resin, an urethane resin, a maleimide resin, a cyanate resin, a benzoxazine resin, an epoxy acrylate resin, and an urethane acrylate resin. One or more of the above resins can be selected as appropriate and used as the thermosetting resin. Among the above resins, an epoxy resin is preferable because the epoxy resin makes it possible to obtain a high-strength cured product.

### (Curing agent)

The curing agent for the thermosetting resin is not particularly limited provided that the curing agent allows a curing reaction of the thermosetting resin to progress. Note, however, that the curing agent is preferably an amine-based curing agent that is a compound having an amino group, or an amine-based curing agent from which a compound having an amino group is produced by decomposition. This is because the amine-based curing agent allows the thermosetting resin that has been cured to have high physical properties. In order to achieve a higher curing speed, it is possible to use, as the curing agent, an imidazole compound having an imidazole ring, or to use, in combination with the imidazole compound, an urea compound serving as an auxiliary curing agent and having an urea group.

The thermosetting resin composition can further contain other component(s) in addition to the thermosetting resin (described earlier) and the curing agent (described earlier), provided that the effect of the present embodiment is brought about. The other component(s) can be of a single kind or can be of two or more kinds. Examples of the other component(s) include an auxiliary curing agent, a mold release agent, a defoaming agent, an ultraviolet absorber, and a filler.

### (Viscosity of matrix resin composition)

In terms of handleability of the reinforcing fiber base material, the matrix resin composition has a viscosity which, at 30°C, is preferably 10000 Pa·s to 50000 Pa·s, and more preferably 15000 Pa·s to 35000 Pa·s.

Further, in temperature rise viscosity measurement in which the matrix resin composition, such as the thermosetting resin composition, that is contained in the reinforcing fiber base material in accordance with an embodiment of the present invention is heated at a rate of 2.0°C/minute, a minimum viscosity is preferably 0.3 Pa·s to 20 Pa·s, and more preferably 0.5 Pa·s to 20 Pa·s. In a case where the minimum viscosity is not less than 0.3 Pa·s, a resin will flow in a smaller amount during press molding, and a fiber-reinforced composite material to be obtained will be prevented from having a poor appearance (e.g. having an uneven surface). In a case where the minimum viscosity is not less than 0.5 Pa·s, a resin will flow in an even smaller amount during press molding, and a fiber-reinforced composite material to be obtained will be even more prevented from having a poor appearance (e.g. having an uneven surface). The minimum viscosity that is not more than 20 Pa·s is preferable so that a resin will flow in an increased amount and so that occurrence of a failure such that every corner of the mold is not filled with the resin composition will be prevented during press molding.

The minimum viscosity is preferably exhibited at a temperature falling within a range of 100°C to 120°C. The minimum viscosity that is exhibited at a temperature higher than or equal to 100°C is preferable so that an excessively reduced amount of resin flow during press molding will not prevent the matrix resin composition from spreading into a molded article. The minimum viscosity that is exhibited at a temperature lower than or equal to 120°C is preferable in terms of a reduction in amount of flow during press molding.

### <Curing properties of matrix resin composition>

In a case where the matrix resin composition contained in the reinforcing fiber base material in accordance with an embodiment of the present invention is a thermosetting resin composition, a curing completion time at 140°C of the thermosetting resin composition as measured with use of a curelastometer is preferably 2.0 minutes to 15.0 minutes, more preferably 2.0 minutes to 10.0 minutes, and still more preferably 2.0 minutes to 8.0 minutes.

### <Evaluation and evaluation method>

The measurement with use of the curelastometer is carried out in accordance with JIS K6300, which is the industrial standard for a rubber vulcanization test. In this case, a cyclic frequency is 100 cpm, an amplitude angle is ±1/4°, and a die shape is WP-100.

A torque-time curve outputted by the curelastometer is a curve that is obtained assuming that a vertical axis shows a measured torque and a horizontal axis shows a time. In general, a torque increases as a curing reaction of a resin progresses, and, when the curing reaction is coming to an end, the torque ends increasing to have a constant value.

The above curing completion time is assumed to be a time for which a gradient of a tangent to the torque-time curve reaches a maximum value and then reaches a value that is 1/20 of the maximum value.

In a case where the curing completion time at 140°C as measured with use of the curelastometer is not more than 15.0 minutes, the matrix resin composition such as the thermosetting resin composition that is contained in the reinforcing fiber base material in accordance with an embodiment of the present invention is highly curable. As such, a press mold can be used for press molding for a shorter time. This makes it possible to accelerate a molding cycle. In a case where the curing completion time at 140°C as measured with use of the curelastometer is not less than 2.0 minutes, there is time for a resin to flow. This allows the resin to sufficiently spread into a molded article.

### (Resin content of reinforcing fiber base material)

The reinforcing fiber base material has a resin content of preferably 20 mass% to 45 mass%, and more preferably 25 mass% to 40 mass%. The resin content that is not less than 20 mass% is preferable so that voids in the reinforcing fiber base material will be reduced. The resin content that is not more than 45 mass% is preferable so that the reinforcing fiber base material will have higher mechanical properties and so that the reinforcing fiber base material will be prevented from being too tacky. A resin of the resin content refers to a resin in a matrix resin composition contained in the reinforcing fiber base material.

### (Form of reinforcing fiber base material containing matrix resin composition)

Among reinforcing fiber base materials, one which contains a matrix resin composition is referred to as a "reinforcing fiber base material containing a matrix resin composition". The reinforcing fiber base material containing a matrix resin composition is generally called a "prepreg". Examples of the types of the reinforcing fiber base material that contains a matrix resin composition and can be used, in combination with the reinforcing fiber base material having a parallel cut, in the method for manufacturing the preform in accordance with the present embodiment include sheet-like base materials such as a sheet-like base material formed of a plurality of arranged tape-like prepregs, a cloth prepreg, and a unidirectional prepreg.

The reinforcing fiber base material containing a matrix resin composition can be used such that one type of such reinforcing fiber base material is used alone, or two or more types of such reinforcing fiber base material are used in combination, or such reinforcing fiber base material is used in combination with a reinforcing fiber base material that does not contain a matrix resin composition. In a case of using the reinforcing fiber base material in combination in the manufacturing of a preform for compression molding of in the manufacturing of a molded article by compression molding, it is preferable to use the reinforcing fiber base material containing a matrix resin composition, in terms of reducing defects such as voids in the molded article. The following description will discuss types of reinforcing fiber base materials containing respective matrix resin compositions.

A form of material in which reinforcing fibers are unidirectionally aligned is referred to as a unidirectional material. Examples of the unidirectional material include: a unidirectional material in which reinforcing fibers are unidirectionally oriented; and unidirectional woven fabric in which reinforcing fibers unidirectionally aligned are stitched, that is, in which reinforcing fibers unidirectionally oriented are stitched with auxiliary thread or the like.

Among the examples of the unidirectional material, a reinforcing fiber base material which contains a matrix resin composition and is obtained by impregnating unidirectionally oriented reinforcing fibers with the matrix resin composition is referred to as a unidirectional prepreg.

### (Method for manufacturing unidirectional prepreg)

Examples of a method for manufacturing the sheet-like unidirectional prepreg include a hot melt method. According to the hot melt method, a thermosetting resin composition that has been made into a film is attached to a plurality of reinforcing fiber bundles, which are aligned so as to be wide and in each of which reinforcing fibers are unidirectionally aligned, and then the reinforcing fiber bundles are impregnated with the matrix resin composition (e.g. a thermosetting resin composition) by heating and pressurization.

### (Tape-like prepreg)

In terms of partially reinforcing a preform and/or a molded article in accordance with an embodiment of the present invention, a tape-like prepreg can be used as a reinforcing fiber base material which contains a matrix resin composition and is obtained by impregnating a unidirectionally oriented, narrow reinforcing fiber base material with the matrix resin composition. Examples of the tape-like prepreg include a slit tape and a tow prepreg. The slit tape can be prepared from a sheet-like unidirectional prepreg that is impregnated with a matrix resin composition in a state in which reinforcing fiber bundles are unidirectionally aligned. The slit tape is a tape-like prepreg prepared by cutting the unidirectional prepreg into a strip shape with use of a dedicated slitter.

### (Slit tape)

The slit tape is a tape-like reinforcing fiber base material obtained by slitting, in an orientation direction of reinforcing fibers, a sheet-like unidirectional prepreg that is impregnated with a matrix resin composition such as a thermosetting resin composition in a state in which reinforcing fiber bundles are unidirectionally aligned. The slit tape is, for example, a narrow reinforcing fiber base material obtained by cutting an ordinary unidirectional prepreg into a strip shape with use of a slitter, and then winding the prepreg thus cut on a bobbin such as a paper tube.

### (Method for manufacturing slit tape)

A slit tape can be prepared by cutting, into a strip shape with use of a dedicated slitter, a sheet-like unidirectional prepreg that is impregnated with a thermosetting resin composition in a state in which a plurality of reinforcing fiber bundles are unidirectionally aligned. Examples of a method for manufacturing the unidirectional prepreg include a hot melt method. According to the hot melt method, a thermosetting resin composition that has been made into a film is attached to reinforcing fiber bundles that are unidirectionally aligned, and then the reinforcing fiber bundles are impregnated with the thermosetting resin composition by heating and pressurization.

### (Tow prepreg)

A tow prepreg is a tape-like reinforcing fiber base material which contains a matrix resin composition and in which continuous reinforcing fiber bundles are impregnated with a matrix resin composition such as a thermosetting resin composition. The tow prepreg is, for example, a narrow reinforcing fiber base material obtained by impregnating, with a thermosetting resin, a reinforcing fiber bundle including thousands to tens of thousands of filaments that are unidirectionally arranged.

The reinforcing fiber bundle is a bundle of a plurality of reinforcing fibers. The reinforcing fiber bundle includes 1000 filaments to 100000 filaments, preferably 1000 filaments to 60000 filaments, and more preferably 3000 filaments to 50000 filaments. The reinforcing fiber bundle that includes not more than 60000 filaments is preferable in terms of facilitation of impregnation of the reinforcing fiber bundle with the matrix resin composition. It is preferable that the reinforcing fiber bundle includes not less than 1000 filaments, in terms of productivity of the reinforcing fiber bundle.

### (Method for manufacturing tow prepreg)

The tow prepreg can be prepared by impregnating the reinforcing fiber bundle with the matrix resin composition such as a thermosetting resin composition. The matrix resin composition such as a thermosetting resin composition can be supplied to the reinforcing fiber bundle by a known method. Examples of such a method for supplying the matrix resin composition include a resin bath method, a rotating roll method, an on-paper transfer method, and a nozzle dropping method.

According to the resin bath method, a unidirectionally oriented, narrow reinforcing fiber bundle (tow) is impregnated with a matrix resin composition such as a thermosetting resin composition by being caused to pass through a resin bath in which the thermosetting resin composition is stored, and then an excess of the matrix resin composition such as a thermosetting resin composition is squeezed with use of an orifice, a roll, or the like, so that a resin content in the reinforcing fiber bundle is adjusted. The rotating roll method is a transfer roll impregnation method in which a layer of a matrix resin composition such as a thermosetting resin composition is formed on a rotating roll and transferred to a tow. Examples of the rotating roll method include an impregnation method carried out with use of a rotating drum having a doctor blade.

According to the on-paper transfer method, a layer of a matrix resin composition such as a thermosetting resin composition is formed on paper and transferred to a tow. The nozzle dropping method is disclosed in each of publications such as Japanese Patent Application Publication Tokukaihei No. 09-176346, Japanese Patent Application Publication Tokukai No. 2005-335296, and Japanese Patent Application Publication Tokukai No. 2006-063173.

Among the above methods, the rotating roll method is preferable in terms of (i) control of an amount of a matrix resin composition such as a thermosetting resin composition supplied and (ii) easiness to carry out. The reinforcing fiber bundle is preferably uniformly impregnated with matrix resin composition such as a thermosetting resin composition in terms of (i) a reduction in void in a molded article and (ii) prevention or reduction of a deterioration in physical properties.

### (Cloth prepreg)

The cloth prepreg is a reinforcing fiber base material which contains a matrix resin composition and in which the cloth material is impregnated with the matrix resin composition. The cloth material can be a cloth material having any of woven structures such as unidirectional woven fabric in which reinforcing fibers are provided in a required direction; bidirectional woven fabric such as plain woven fabric, sateen woven fabric, or twill woven fabric; triaxial fabric; and noncrimp fabric. The cloth material is particularly preferably plain woven fabric, twill woven fabric, and sateen woven fabric, because these easily undergo shear deformation.

### (Method for manufacturing cloth prepreg)

The cloth prepreg can be manufactured by impregnating a matrix resin composition, in accordance with a method similar to the method, described earlier in the section (Method for manufacturing slit tape), for manufacturing the unidirectional prepreg.

### (Sheet molding compound)

A sheet molding compound (hereinafter referred to as an "SMC") is a sheet-like material containing: reinforcing fibers, each of which has been cut into approximately 3 mm to 100 mm pieces; and a thermosetting resin or a thermoplastic resin.

### (Method for manufacturing SMC)

The SMC is manufactured in such a manner that, for example, a reinforcing fiber bundle, in which reinforcing fibers have been cut into approximately 3 mm to 100 mm pieces, is sprinkled into a sheet-like shape, and then the reinforcing fiber bundle is sufficiently impregnated with a matrix resin composition.

The preform in accordance with the present embodiment has a plurality of cuts in an orientation direction of reinforcing fibers in a zone which is to undergo shear deformation and/or compressive deformation. As such, when a cross section obtained by cutting the preform in a direction intersecting the reinforcing fibers is viewed, a pool of the resin is observed between the reinforcing fibers in each layer. A preform manufactured by the method in accordance with the present embodiment can be recognized from this viewpoint.

### [2. Method for manufacturing fiber-reinforced composite material molded article]

A method for manufacturing a fiber-reinforced composite material molded article in accordance with the present embodiment include the method (described earlier) for manufacturing the preform as a step of manufacturing a preform, and further includes a heating and pressurization step of subjecting the preform to heating and pressurization in a metal mold. The method the reinforcing fiber base material of the method for manufacturing the fiber-reinforced composite material molded article in accordance with the present embodiment includes a step of molding the reinforcing fiber base material with use of a mold (for example, a molding mold). In this case, the fiber-reinforced composite material molded article can be obtained by molding the reinforcing fiber base material with use of a mold, without preparing the preform. For purposes such as increasing the conformity to a three-dimensional shape, the reinforcing fiber base material is preferably configured such that the zone which is to undergo shear deformation and/or compressive deformation undergoes shear deformation and/or compressive deformation during deformation with use of a mold. The "during deformation with use of a mold" is, for example, "during deformation with use of a mold during molding". The structure and shape of the mold can be similar to or different from the structure and shape of the preform mold described above. For purposes such as increasing the conformity to a three-dimensional shape, the shape of the mold is preferably similar to the shape of the preform mold described above.

Depending on the mold such as the above preform mold, the method may include a step of causing the reinforcing fiber base material containing the reinforcing fiber base material and/or the matrix resin composition to undergo deformation. That is, in the present embodiment, the step of causing the reinforcing fiber base material to undergo deformation with use of a mold can be a step in which the reinforcing fiber base material is molded into the shape of the fiber-reinforced composite material molded article directly with use of a molding mold. Alternatively, the step of causing the reinforcing fiber base material to undergo deformation with use of a mold can include: preforming, with use of a preform mold, the reinforcing fiber base material into a shape that is close to the shape of the fiber-reinforced composite material molded article; and molding the preform, which has been formed by preforming, with use of the preform mold. Thus, in the present embodiment, "deformation" can be a general term for preforming and molding, and in that case, "deformation" encompasses one or both of the meanings of preforming and molding.

### <Heating and pressurization step>

In the heating and pressurization step, for example, the preform is provided in a lower mold of the metal mold whose temperature is adjusted in advance. Next, the metal mold is closed by bringing an upper mold of the metal mold, whose temperature is adjusted in advance, in proximity to the lower mold, so that the preform is subjected to pressurization. The metal mold has a temperature in a range of preferably 100°C to 170°C, and more preferably 130°C to 150°C. The temperatures of the upper mold and the lower mold may be the same or different, but are preferably the same. The metal mold has a contact pressure of preferably 1 MPa to 15 MPa, and more preferably 4 MPa to 10 MPa during the molding. The preform is thus cured by being subjected to heating and pressurization with use of a molding mold.

A molding time is preferably 1 minute to 15 minutes, and more preferably 2 minutes to 5 minutes. This results in obtainment of the molded article that has a predetermined shape. The molding time can be determined as appropriate in accordance with (i) productivity that the molded article is required to have and (ii) selection of a material for achieving the productivity. For example, in a case where a thermosetting resin for an automobile product (described earlier) is selected as appropriate, the molded article can be obtained by the heating and pressurization (described earlier) for 150 seconds to 600 seconds.

In a case where the matrix resin is a thermoplastic resin, the molded article can be obtained in the form of a solidified product, by softening the matrix resin composition contained in the reinforcing fiber base material, imparting a shape, and then cooling the reinforcing fiber base material. In a case where the matrix resin is a thermosetting resin, the molded article can be obtained in the form of a cured product, by curing the matrix resin composition contained in the reinforcing fiber base material. Further, by molding the above reinforcing fiber base material and a reinforcing fiber base material of a type different from the reinforcing fiber base material, a molded article in the form of a cured product or a solidified product of the reinforcing fiber base materials can be obtained.

Thus, a fiber-reinforced composite material molded article in accordance with the present embodiment is a cured product or a solidified product of a preform obtained by the method (described earlier) for manufacturing a preform. A fiber-reinforced composite material molded article in accordance with the present embodiment is a cured product or a solidified product of the reinforcing fiber base material. The molded article can be recognized by that cutting through a reinforcing fiber does not make a difference between the strength of a zone which is to undergo shear deformation and/or compressive deformation during deformation with use of a mold and the strength of a zone which is not to undergo deformation and/or compressive deformation.

In the method for manufacturing a fiber-reinforced composite material molded article in accordance with the present embodiment, a fiber-reinforced composite material molded article can be manufactured from the reinforcing fiber base material without preparing the preform (described earlier). That is, the present embodiment encompasses a method for manufacturing a composite material molded article including a molding step of subjecting one or more of the reinforcing fiber base material to heating and pressurization and then to cooling to produce a composite material molded article.

In a case where a fiber-reinforced composite material molded article is manufactured without preparing a preform, a reinforcing fiber base material may be pressed with an appropriate pressing force with a mold having an appropriate shape so that the reinforcing fiber base material is formed into the shape of a composite material molded article. The molding step may be carried out in the same manner as the foregoing "step of producing a composite material molded article by subjecting a preform to heating and pressurization". For example, the molding step may involve applying heat and pressure to a reinforcing fiber base material fixed with a mold at a sufficient temperature and for a sufficient period of time for producing a composite material molded article from the reinforcing fiber base material.

In the present embodiment, a fiber-reinforced composite material molded article having a good appearance and strength can be manufactured with use of a shaping mold similar to the preform mold, also by such a method of manufacturing a fiber-reinforced composite material molded article directly from the reinforcing fiber base material without preparing a preform. Such a method of manufacturing a fiber-reinforced composite material molded article can be carried out in the same manner as, for example, the foregoing method of manufacturing a preform using a preform mold. This production method does not involve manufacturing a preform, and therefore operations for manufacturing a fiber-reinforced composite material molded article from the preform can be skipped. Therefore, this production method is superior in workability.

In the fiber-reinforced composite material molded article to be obtained by the method for manufacturing the fiber-reinforced composite material molded article in accordance with the present embodiment, a wrinkle and reinforcing fiber meandering are less likely to occur during the molding. This is because the reinforcing fiber base material or the preform is subjected to heating and pressurization and cured. Further, since the reinforcing fiber bundle has substantially no cut that cuts through a fiber, it is possible to obtain strength derived from continuous fibers. Thus, the method for manufacturing the fiber-reinforced composite material molded article in accordance with the present embodiment makes it possible to manufacture the fiber-reinforced composite material molded article that has a good appearance (excels in appearance) and high strength.

Aspects of the present invention can also be expressed as follows:
As is clear from the above descriptions, a method for manufacturing a fiber-reinforced composite material molded article in accordance with the present embodiment includes a step of causing a reinforcing fiber base material to undergo deformation with use of a mold, the reinforcing fiber base material including: reinforcing fibers which are unidirectionally oriented; and a matrix resin composition, the reinforcing fiber base material including a zone which is to undergo shear deformation and/or compressive deformation, having a cut in the zone which is to undergo the shear deformation and/or the compressive deformation, the cut being substantially parallel to an orientation direction of the reinforcing fibers, and having substantially no cut that cuts through a fiber.

According to the above configuration, it is possible to manufacture a fiber-reinforced composite material molded article having a good appearance and a high strength.

The method in accordance with the present embodiment can be configured such that the zone which is to undergo the shear deformation and/or the compressive deformation undergoes the shear deformation and/or the compressive deformation during the deformation with use of the mold.

According to the above configuration, it is possible to manufacture a fiber-reinforced composite material molded article having a good appearance and a high strength.

The method in accordance with the present embodiment can be configured such that the mold has a three-dimensional shape.

According to the above configuration, it is possible to manufacture a fiber-reinforced composite material molded article having a good appearance and a high strength.

The method in accordance with the present embodiment can be configured such that, when a two-dimensional figure is obtained by projecting a surface of the mold onto a plane so as to maximize a projected area of the mold, which surface makes contact with the reinforcing fiber base material and/or a material other than the reinforcing fiber base material, the mold includes a zone in which a ratio (l₁/l₁') of l₁ to l₁' is different from a ratio (l₂/l₂') of l₂ to l₂' where: a direction in which the surface is projected is a Z direction; a direction along a shortest line segment that passes through a geometric center of the two-dimensional figure is an X direction; a direction orthogonal to the X direction in the two-dimensional figure is a Y direction; a shortest line segment that is parallel to the Y direction in the two-dimensional figure is L₁', a length of L₁' is l₁', a line segment that extends along the shape of the mold and corresponds to L₁' is L₁, and a length of L₁ is l₁; and a line segment that is parallel to L₁' in the two-dimensional figure is L₂', a length of L₂' is l₂', a line segment that extends along the shape of the mold and corresponds to L₂' is L₂, and a length of L₂ is l₂.

According to the above configuration, it is possible to improve shear deformation properties of the reinforcing fiber base material and thus increase conformity to the three-dimensional shape. This makes it possible to manufacture a fiber-reinforced composite material molded article having a good appearance.

Further, the method can be configured such that a part of the reinforcing fiber base material, which part corresponds to the two-dimensional figure obtained by projecting, onto the plane, the surface of the mold which surface makes contact with the reinforcing fiber base material and/or the material other than the reinforcing fiber base material, has the cut in a portion between L₁ and L₂.

The above configuration allows a part of the reinforcing fiber base material to overlap with another part of the reinforcing fiber base material, and increases the degree of freedom in deformation of the reinforcing fiber base material, so that the reinforcing fiber base material undergoes deformation. This makes it possible to let an excess part of the sheet member to escape. It is thus possible to manufacture a fiber-reinforced composite material molded article having a good appearance.

Further, the method in accordance with the present embodiment can be configured such that the mold includes a zone in which a ratio (l₃/l₃') of l₃ to l₃' is different from a ratio (l₄/l₄') of 14 to l₄' where: a shortest line segment that is parallel to the X direction in the two-dimensional figure is L₃', a length of L₃' is l₃', a line segment that extends along the shape of the mold and corresponds to L₃' is L₃, and a length of L₃ is l₃; and a line segment that is parallel to L₃' in the two-dimensional figure is L₄', a length of L₄' is l₄', a line segment that extends along the shape of the mold and corresponds to L₄' is L₄, and a length of L₄ is 14.

According to the above configuration, it is possible to improve shear deformation properties of the reinforcing fiber base material and thus increase conformity to the three-dimensional shape. This makes it possible to manufacture a fiber-reinforced composite material molded article having a good appearance.

Further, the method in accordance with the present embodiment can be configured such that a part of the reinforcing fiber base material which part corresponds to the two-dimensional figure obtained by projecting the mold onto the plane has the cut in a portion between L₃ and L₄.

The above configuration allows a part of the reinforcing fiber base material to overlap with another part of the reinforcing fiber base material, and increases the degree of freedom in deformation of the reinforcing fiber base material, so that the reinforcing fiber base material undergoes deformation. This makes it possible to let an excess part of the sheet member to escape. It is thus possible to manufacture a fiber-reinforced composite material molded article having a good appearance.

Further, the method in accordance with the present embodiment can be configured such that a portion of the reinforcing fiber base material which portion has the cut substantially parallel to the orientation direction of the reinforcing fibers differs in area from a portion of the mold which portion corresponds to the portion of the reinforcing fiber base material.

The above configuration allows a part of the reinforcing fiber base material to overlap with another part of the reinforcing fiber base material, and increases the degree of freedom in deformation of the reinforcing fiber base material, so that the reinforcing fiber base material undergoes deformation. This makes it possible to let an excess part of the sheet member to escape. It is thus possible to manufacture a fiber-reinforced composite material molded article having a good appearance.

Further, the method in accordance with the present embodiment can be configured such that an amount of the shear deformation is not less than 1° and not more than 60°.

According to the above configuration, the cut can sufficiently exhibit the effect of improving the shear deformation properties of the reinforcing fiber base material. The configuration also makes it possible to reduce fiber meandering and a wrinkle of the fiber-reinforced composite material molded article.

Further, the method in accordance with the present embodiment can be configured such that an amount of the compressive deformation is not more than 30% of an area of the zone which is to undergo the compressive deformation.

According to the above configuration, the cut can sufficiently exhibit the effect of improving the shear deformation properties of the reinforcing fiber base material. The configuration also makes it possible to reduce fiber meandering and a wrinkle of the fiber-reinforced composite material molded article.

Further, the method in accordance with the present embodiment can be configured such that, when a two-dimensional figure is obtained by projecting the mold onto a plane so as to maximize a projected area of the mold, the cut in the reinforcing fiber base material has a length of not less than 0.5% of l₅' where a length of a longest line segment L₅' that is parallel to the orientation direction of the reinforcing fibers in the two-dimensional figure is l₅'.

According to the above configuration, it is possible to increase the shear deformation properties of the reinforcing fiber base material, and thus manufacture a fiber-reinforced composite material molded article having a good appearance and a high strength.

Further, the method in accordance with the present embodiment can be configured such that the cut includes a plurality of cuts spaced apart from each other in the orientation direction at an interval of not less than 0.5% and less than 70% of l₅'.

According to the above configuration, it is possible to increase the shear deformation properties of the reinforcing fiber base material, and thus manufacture a fiber-reinforced composite material molded article having a good appearance and a high strength.

Further, the method in accordance with the present embodiment can be configured such that the cut includes a plurality of cuts spaced apart from each other in a direction orthogonal to the orientation direction at an interval of not less than 10% of a shortest distance between L₃ and L₄ or of a shortest distance between L₁ and L₂.

According to the above configuration, it is possible to increase the shear deformation properties of the reinforcing fiber base material, and thus manufacture a fiber-reinforced composite material molded article having a good appearance and a high strength.

Further, the method in accordance with the present embodiment can be configured such that (i) one or more of the reinforcing fiber base material having the cut and (ii) a reinforcing fiber base material differing in type from the one or more of the reinforcing fiber base material are molded with use of the mold.

According to the above configuration, it is possible to manufacture a fiber-reinforced composite material molded article having a good appearance and a high strength.

Further, the method in accordance with the present embodiment can be configured such that the step of causing the reinforcing fiber base material to undergo the deformation includes preforming the reinforcing fiber base material with use of a preform mold.

According to the above configuration, it is possible to manufacture a fiber-reinforced composite material molded article from a preform. This is even more effective in terms of manufacturing a fiber-reinforced composite material molded article having a good appearance and a high strength having a good appearance and a high strength.

A reinforcing fiber base material in accordance with the present embodiment includes: reinforcing fibers which are unidirectionally oriented; and a matrix resin composition, the reinforcing fiber base material having a cut in a zone which is to undergo shear deformation and/or compressive deformation, the cut being substantially parallel to an orientation direction of the reinforcing fibers, and having substantially no cut that cuts through a fiber.

According to the above configuration, it is possible to obtain a fiber-reinforced composite material molded article having a good appearance and a high strength.

A fiber-reinforced composite material molded article in accordance with the present embodiment is a cured product or a solidified product of the reinforcing fiber base material.

According to the above configuration, in the fiber-reinforced composite material molded article, a wrinkle and reinforcing fiber meandering are less likely to occur during the molding. Further, the fiber-reinforced composite material molded article has a good appearance and a high strength.

The following will provide Examples to more specifically describe embodiments of the present invention. As a matter of course, the present invention is not limited to Examples provided below, but details of the present invention can be realized in various manners. Further, the present invention is not limited to the embodiments described above, and it may be varied in various ways within the scope of the appended claims. Thus, an embodiment based on a combination of technical means disclosed in different embodiments is encompassed in the technical scope of the present invention. Furthermore, all of the publications and patents cited in the present specification are incorporated herein by reference in their entirety.

### Examples

### [Example 1]

### (Manufacturing of reinforcing fiber base material)

A reinforcing fiber base material prepared in Example 1 was obtained by impregnating, with a matrix resin composition, a carbon fiber bundle (manufactured by Mitsubishi Chemical Corporation; product name: TR50S) which was a reinforcing fiber base material and in which carbon fibers were unidirectionally aligned. The matrix resin composition was a mixture in which jER828 and an epoxy resin prepolymer were mixed at a ratio of 86.9 : 13.1 (unit: parts by mass). The epoxy resin prepolymer was prepared according to the method of manufacturing component D-2 disclosed in Japanese Patent No. 5682838. The matrix resin composition was heated at 100°C, and the viscosity measured at approximately room temperature (30°C) with use of a B-type viscometer was 35,000 Pa·s, and the curing completion time measured with use of a curelastometer was 5 minutes. In the temperature rise viscosity measurement in which the matrix resin composition was heated at a rate of 2.0°C/minute, a minimum viscosity of 0.8 Pa·s was exhibited at a temperature of 120°C. The glass transition point Tg of the matrix resin composition was 170°C. The reinforcing fiber base material had a thickness of 0.22 mm.

### (Cutting of reinforcing fiber base material)

A cutting device as illustrated in Fig. 8 was used to cut the reinforcing fiber base material into a shape as illustrated in Fig. 1. The length of the reinforcing fiber base material in the Y direction was 532 mm, and the lengths of a longer side and a shorter side of the reinforcing fiber base material in the X direction were 550 mm and 500 mm, respectively.

### (Formation of parallel cuts)

With use of a cutting plotter, parallel cuts were formed in the reinforcing fiber base material, so that the reinforcing fiber base material having the parallel cuts was manufactured. Fig. 10 is a view schematically illustrating an arrangement of cuts in prepreg sheets used in Example 1. Two types of reinforcing fiber base materials having parallel cuts as illustrated in Fig. 10 were manufactured. Note that the term "fiber direction" indicated in Fig. 10 and the subsequent figures means an orientation direction of reinforcing fibers.

### (Lamination)

The reinforcing fiber base materials having the parallel cuts were stacked such that the orientation directions of the reinforcing fibers contained in the respective sheets were orthogonal to each other. Thus, a laminate was obtained in which, as illustrated in Fig. 10, two reinforcing fiber base material sheets were stacked so that respective reinforcing fiber orientation directions of the two reinforcing fiber base material sheets intersected at right angles. Such an arrangement of reinforcing fiber base materials in a laminate may be referred to as "0°/90°". In Fig. 10, a figure on the left and a figure on the right on the surface of the sheet on which Fig. 10 is printed represent a 0° layer and a 90° layer, respectively.

### (Compacting)

The obtained laminate was carried onto a flat workbench, and was covered with a debulking device (T-7 tool system; manufactured by TORR SCIENCE CO., Ltd.). Then, the laminate was compacted by using a vacuum pump to cause the inside of the debulking device to be in a state of reduced pressure. The conditions for the state of reduced pressure were: a vacuum pressure of 700 mmHg; and a pressure-reduction time of 5 minutes. Then, an internal pressure of the debulking device was returned to an atmospheric pressure, so that the laminate that has been compacted was obtained.

### (Preparation of preform)

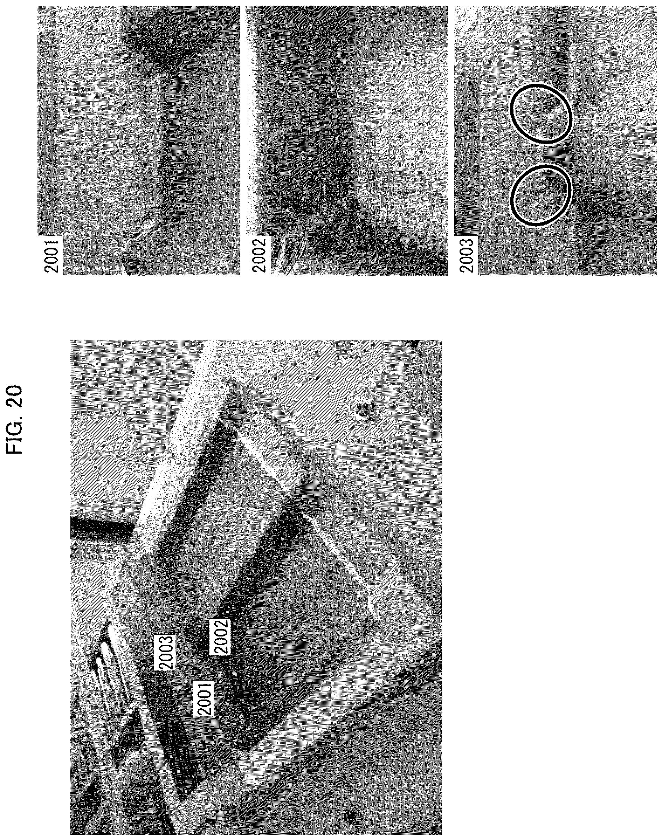

The compacted laminate was placed on an upper part of the opening of a lower mold having open upper surface, and then partially fixed to the lower mold by tackiness of the laminate. As the lower mold, the foregoing lower mold as illustrated in Figs. 2 to 4 was used. L₁ was a line segment passing along a boundary between a top surface 11c and a wall 11a, and L₂ was a line segment passing along a boundary between a bottom 10a and the wall 11a and a boundary between a bottom 10b and a wall 11b. L₃ was a line segment passing along a boundary between a lower portion 21a and an upper portion 21b, and L₄ was a line segment passing along a boundary between a wall 21 and a preform mold 10. Specifically, L₁ was 520 mm, L₂ was 548 mm, L₃ was 440 mm, and L₄ was 530 mm. The laminate thus fixed was heated at 70°C for 30 seconds with use of a movable infrared heater. Then, an upper mold attached to a simple molding machine was lowered so as to sandwich the laminate with the lower mold and the upper mold, and a pressure of 0.03 MPa was applied for 30 seconds. In this way, the laminate was preformed. Next, air was blown to the lower mold and the upper mold to cool the laminate. The upper mold was lifted, so that a preform was obtained. Fig. 20 shows photographs of the obtained preform. Among figures on the right in Fig. 20, the ones indicated as "2001" to "2003" are enlarged views of the respective portions indicated as "2001" to "2003" in a figure on the left in Fig. 20.

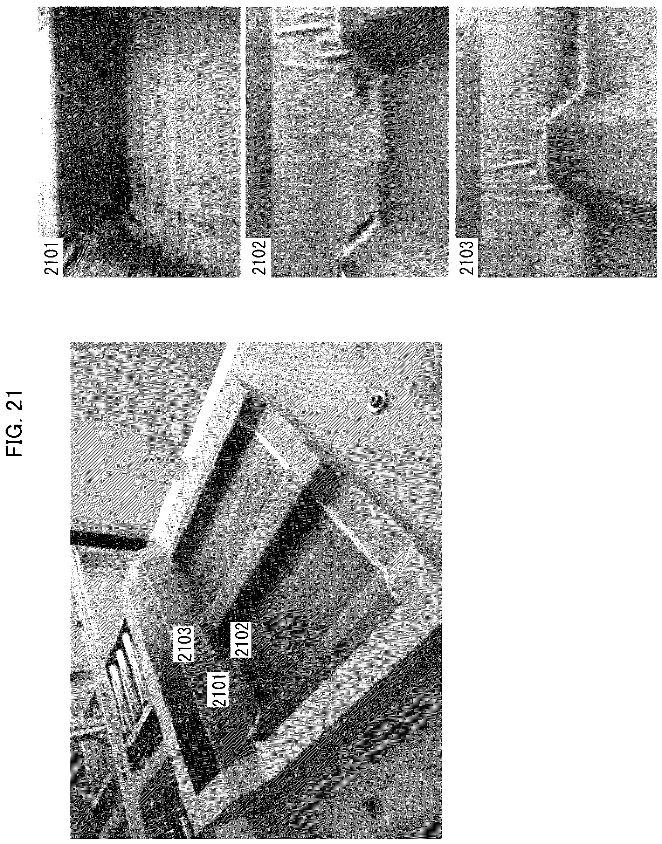

Note that the portion indicated as the reference numeral "2001" is a portion of the wall which portion lies between the long protrusion and a peripheral protrusion. The portion indicated as the reference numeral "2002" is an end part of a side surface of the long protrusion on a wall side. The portion indicated as the reference numeral "2003" is parts of the wall where the wall is connected to the long protrusion, and the vicinities of the parts. Figs. 21 to 26 show portions of the preforms similarly as Fig. 20.

### [Example 2]

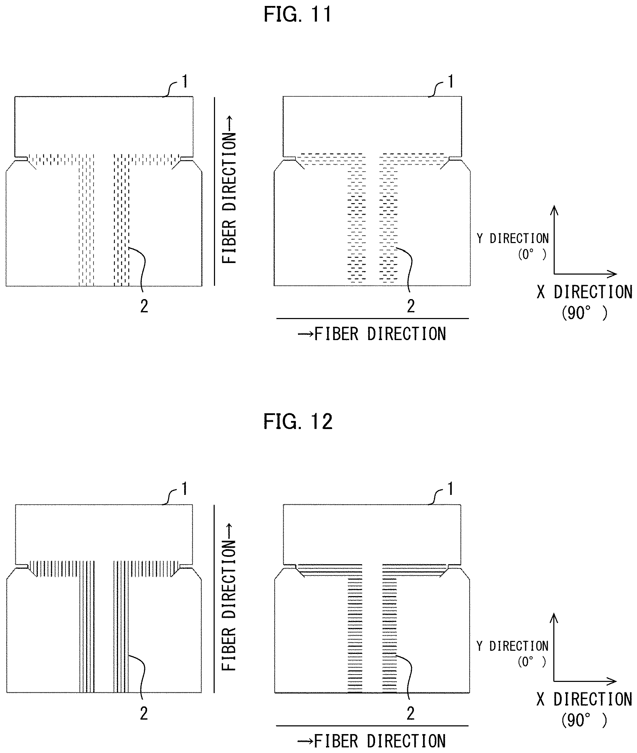

Fig. 11 is a view schematically illustrating an arrangement of cuts in prepreg sheets used in Example 2. A preform was obtained in the same manner as Example 1 except that reinforcing fiber base materials having parallel cuts as illustrated in Fig. 11 were used as two types of reinforcing fiber base materials included in a laminate. In Fig. 11, a figure on the left and a figure on the right represent a 0° layer and a 90° layer, respectively. Fig. 21 shows photographs of the obtained preform. Among figures on the right in Fig. 21, the ones indicated as "2101" to "2103" are enlarged views of the respective portions indicated as "2101" to "2103" in a figure on the left in Fig. 21.

### [Example 3]

Fig. 12 is a view schematically illustrating an arrangement of cuts in prepreg sheets used in Example 3. A preform was obtained in the same manner as Example 1 except that reinforcing fiber base materials having parallel cuts as illustrated in Fig. 12 were used as two types of reinforcing fiber base materials included in a laminate. In

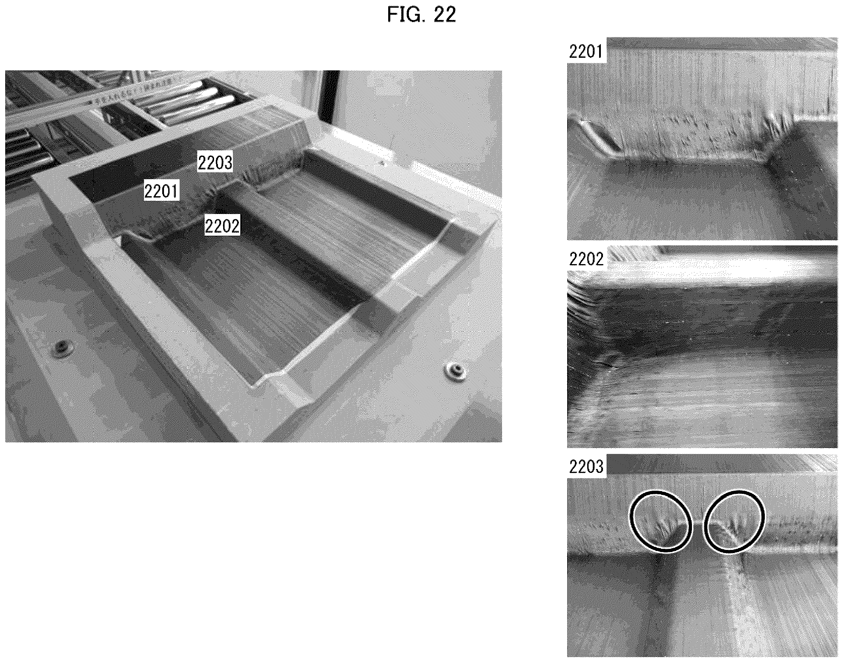

Fig. 12, a figure on the left and a figure on the right represent a 0° layer and a 90° layer, respectively. Fig. 22 shows photographs of the obtained preform. Among figures on the right in Fig. 22, the ones indicated as "2201" to "2203" are enlarged views of the respective portions indicated as "2201" to "2203" in a figure on the left in Fig. 22.

### [Example 4]

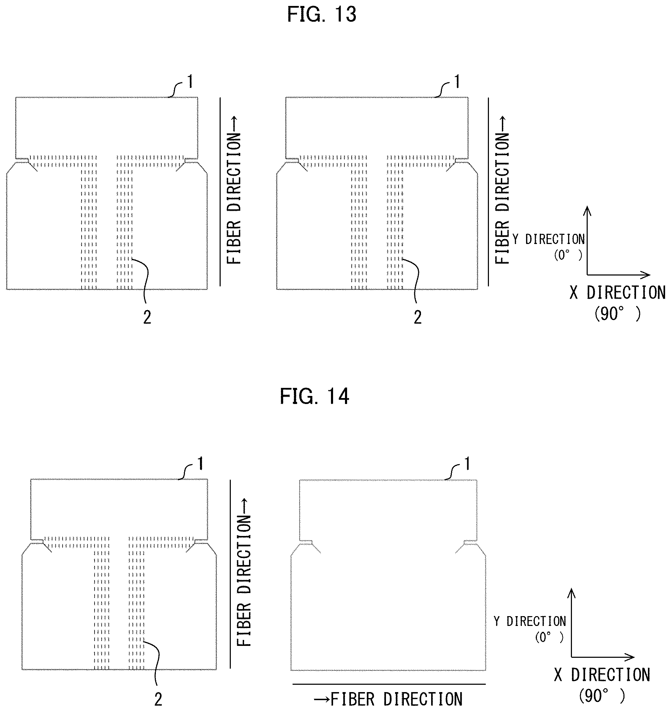

Fig. 13 is a view schematically illustrating an arrangement of cuts in prepreg sheets used in Example 4. It was assumed that a preform was to be obtained in the same manner as Example 1 except that reinforcing fiber base materials having parallel cuts as illustrated in Fig. 13 were used as reinforcing fiber base materials included in a laminate. The laminate was formed by placing one of the reinforcing fiber base materials as illustrated in Fig. 13 such that an orientation direction of reinforcing fibers is the same between the reinforcing fiber base materials.

### [Example 5]

Fig. 14 is a view schematically illustrating an arrangement of cuts in a prepreg sheet used in Example 5. It was assumed that a preform was to be obtained in the same manner as Example 1 except that a reinforcing fiber base material having parallel cuts as illustrated in a figure on the left in Fig. 14 and a reinforcing fiber base material having no parallel cuts as illustrated in a figure on the right in Fig. 14 were used as reinforcing fiber base materials included in a laminate. In Fig. 14, a figure on the left and a figure on the right represent a 0° layer and a 90° layer of the laminate, respectively.

### [Example 6]

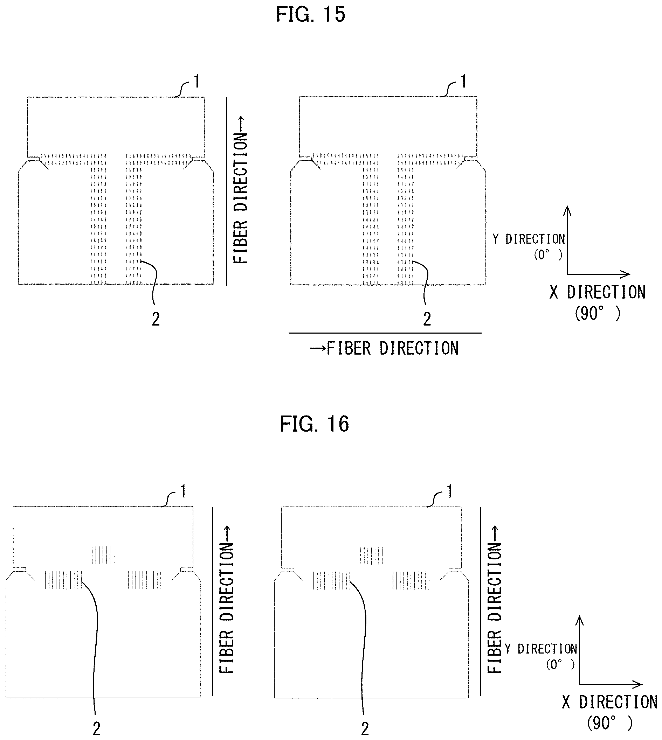

Fig. 15 is a view schematically illustrating an arrangement of cuts in prepreg sheets used in Example 6. It was assumed that a preform was to be obtained in the same manner as Example 1 except that a reinforcing fiber base material having parallel cuts and a reinforcing fiber base material having cuts which cut through reinforcing fibers as illustrated in Fig. 15 were used as reinforcing fiber base materials included in a laminate. In Fig. 15, a figure on the left and a figure on the right represent a 0° layer and a 90° layer, respectively. In the 90° layer, the cuts which cut through reinforcing fibers were provided in the same length as and at the same interval as the cuts in the 0° layer.

### [Example 7]

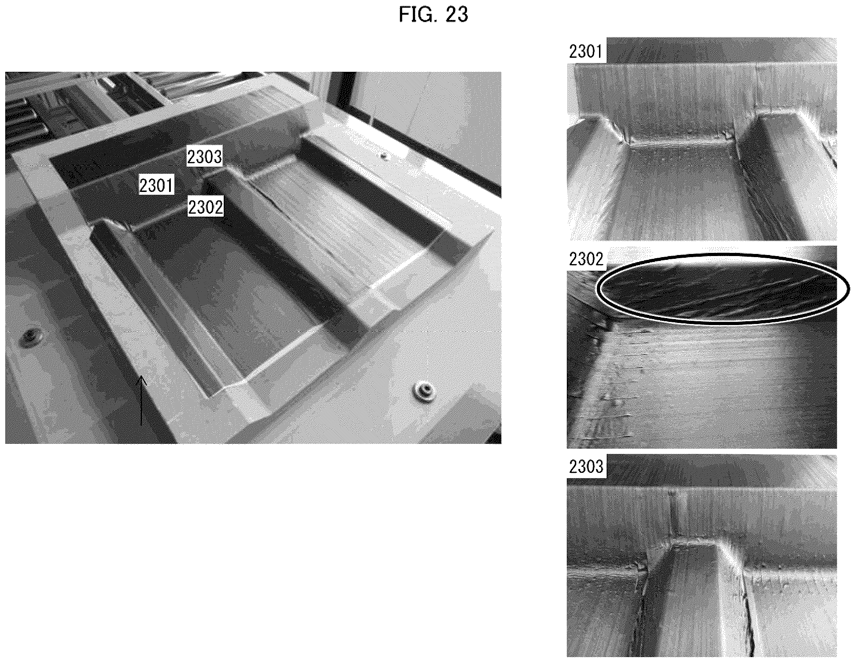

Fig. 16 is a view schematically illustrating an arrangement of cuts in a prepreg sheet used in Example 7. A preform was obtained in the same manner as Example 1 except that a reinforcing fiber base material having parallel cuts as illustrated in Fig. 16 was used as a reinforcing fiber base material included in a laminate. The laminate was formed by placing one of the reinforcing fiber base materials as illustrated in Fig. 16 such that the reinforcing fiber base materials have the same orientation direction of reinforcing fibers. Fig. 23 shows photographs of the obtained preform. Among figures on the right in Fig. 23, the ones indicated as "2301" to "2303" are enlarged views of the respective portions indicated as "2301" to "2303" in a figure on the left in Fig. 23.

The figure corresponding to the right one of the lower portions in the figure on the left in Fig. 23 shows a side surface part of a long protrusion of the preform in Example 7, and the figure corresponding to the left one of the lower portions in the figure on the left in Fig. 23 shows a corner defined by a wall, a peripheral protrusion, and a bottom of the preform. From "2302", it is indicated that fiber twisting is seen on a side surface of a corrugated structure. It is presumed that the fiber twisting is due to the absence of parallel cuts in this portion.

### [Example 8]

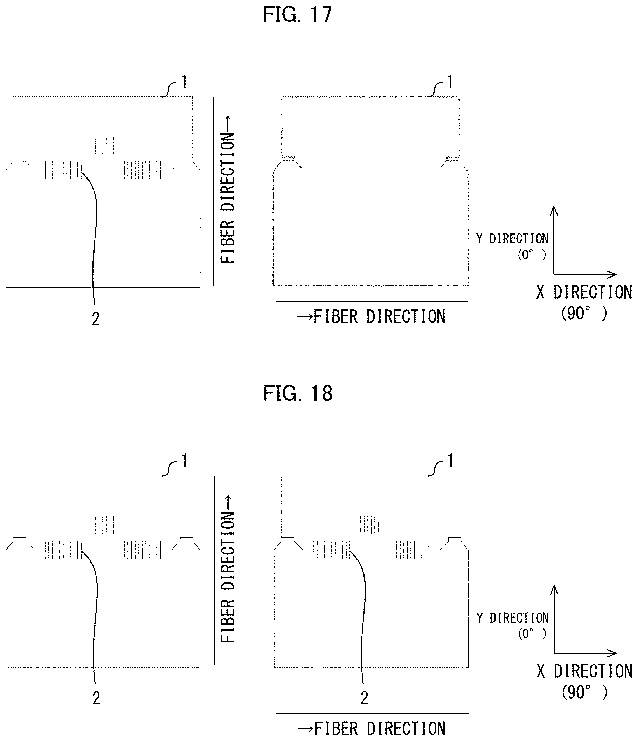

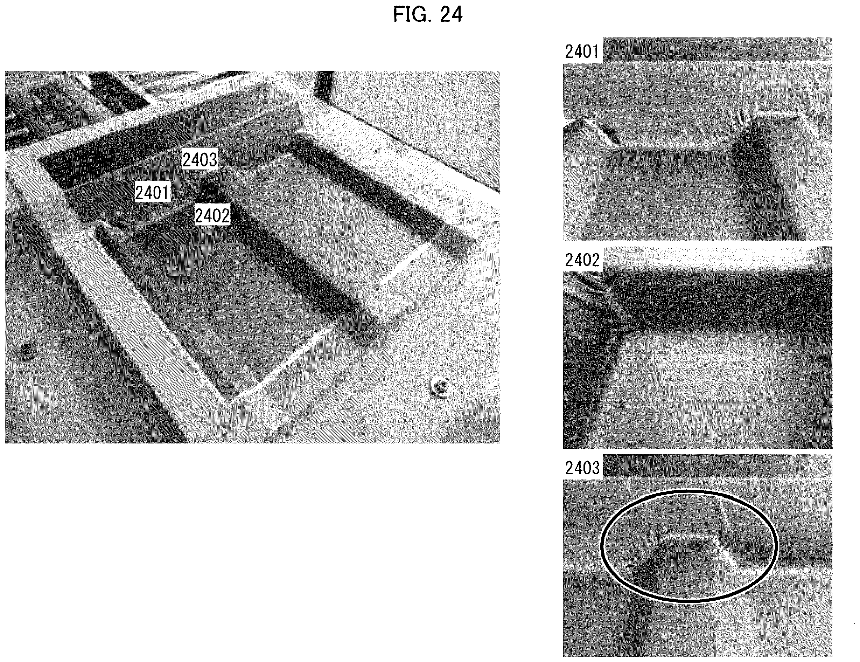

Fig. 17 is a view schematically illustrating an arrangement of cuts in a prepreg sheet used in Example 8. A preform was obtained in the same manner as Example 1 except that a reinforcing fiber base material having parallel cuts as illustrated in Fig. 17 was used as a reinforcing fiber base material included in a laminate. In Fig. 17, a figure on the left and a figure on the right represent a 0° layer and a 90° layer of the laminate, respectively. Fig. 24 shows photographs of the obtained preform. Among figures on the right in Fig. 24, the ones indicated as "2401" to "2403" are enlarged views of the respective portions indicated as "2401" to "2403" in a figure on the left in Fig. 24.

### [Example 9]

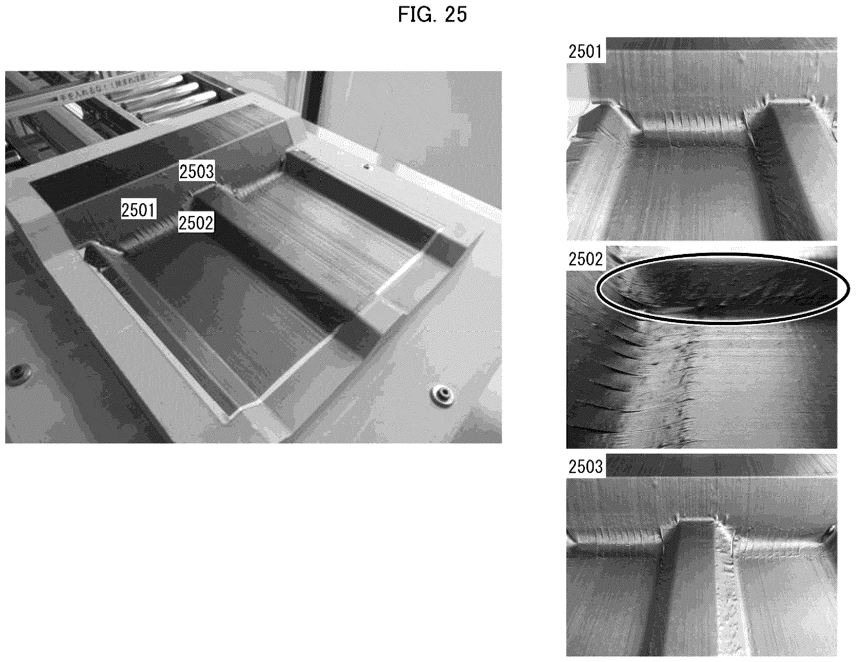

Fig. 18 is a view schematically illustrating an arrangement of cuts in prepreg sheets used in Example 9. A preform was obtained in the same manner as Example 1 except that a reinforcing fiber base material having parallel cuts and a reinforcing fiber base material having cuts which cut through reinforcing fibers as illustrated in Fig. 18 were used as reinforcing fiber base materials included in a laminate. In the 90° layer, the cuts which cut through reinforcing fibers were provided in the same length and at the same interval as the cuts in the 0° layer. In Fig. 18, a figure on the left and a figure on the right represent a 0° layer and a 90° layer, respectively. Fig. 25 shows photographs of the obtained preform. Among figures on the right in Fig. 25, the ones indicated as "2501" to "2503" are enlarged views of the respective portions indicated as "2501" to "2503" in a figure on the left in Fig. 25.

The figure corresponding to the right one of the lower portions in the figure on the left in Fig. 25 a figure on the right shows a side surface part of a long protrusion of the preform in Example 9, and the figure corresponding to the left one of the lower portions in the figure on the left in Fig. 25 shows the portion indicated as the reference numeral "2501" when the portion is viewed obliquely. These figures indicate an expansion of mesh openings in the preform and lifting of the preform from the preform mold. It is presumed that the expansion of the mesh openings and the lifting of the preform are caused because, similar to Example 7, the two types of reinforcing fiber base materials included in the laminate have the cuts in the same position.

### [Comparative Example 1]

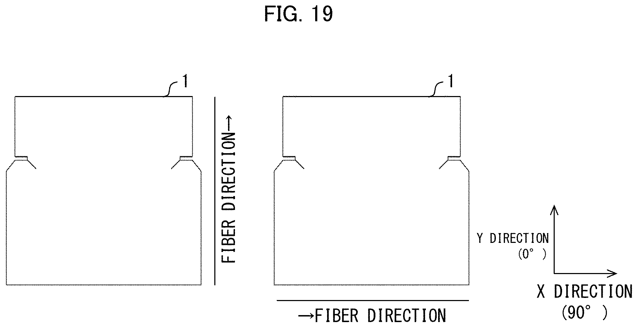

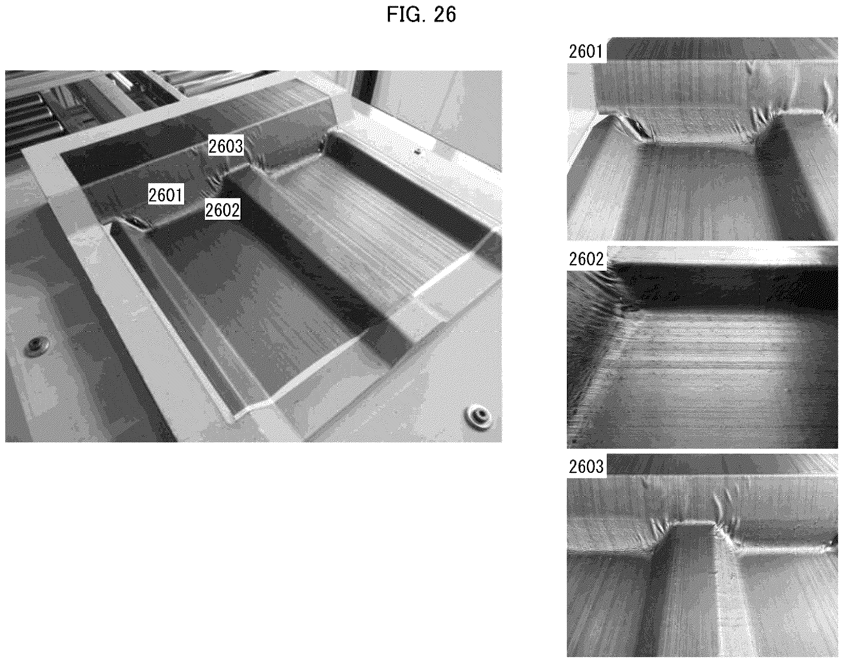

Fig. 19 is a view schematically illustrating prepreg sheets used in Comparative Example 1. A preform was obtained in the same manner as Example 1 except that reinforcing fiber base materials having no parallel cuts as illustrated in Fig. 19 were used as reinforcing fiber base materials included in a laminate. In Fig. 19, a figure on the left and a figure on the right represent a 0° layer and a 90° layer, respectively. Fig. 26 shows photographs of the obtained preform. Among figures on the right in Fig. 26, the ones indicated as "2601" to "2603" are enlarged views of the respective portions indicated as "2601" to "2603" in a figure on the left in Fig. 26.

### [Evaluation of preform]

From observation of manufacturing processes of the preforms in accordance with Examples 1 to 9 and Comparative Example 1 and observation of the preforms thus obtained, the manufacturing processes and the preforms were evaluated for the following three characteristics according to the criteria for each of the characteristics.

### (1) Conformity to the shape of the mold

A: The laminate was sufficiently following the shape of a mold.
B: Although wrinkles occurred, the wrinkles were expected to be reduced by press molding, and were therefore acceptable.
C: The prepreg sheet was insufficiently following the shape of a mold, so that wrinkles appeared to such an extent that large wrinkles would remain even after the press molding.

### (2) Wrinkles at central portion

A: Due to sufficient deformation and movement of the laminate, no wrinkles were observed at the central portion of a floor, which central portion included unevenness in the molded article.
B: Although wrinkles were slightly observed in the central portion of the floor, the extent of the wrinkles was such that the wrinkles were expected be reduced by press molding.
C: Deep and severe wrinkles occurred in the central portion of the floor, so that press molding was expected to be difficult to carry out.

### (3) Fiber meandering during preforming

A: Neither fiber meandering nor fiber twisting during preforming was observed.
B: Although slight fiber meandering or fiber twisting during preforming was observed, the extent thereof was acceptable. C: Extreme fiber meandering or fiber twisting during preforming was observed.

Tables 1 and 2 show the dimensions and arrangement of parallel cuts in the preforms in accordance with Examples 1 to 9 and Comparative Example 1, and evaluation results of the preforms. The evaluation results of Examples 4 to 6 are estimated values on the analogy of the evaluation results of Examples 1 to 3 and 7 to 9. Note that the definitions of l₁ to l₄ and L₁ to L₄ in the tables are the same as described above. In the tables, "D12" represents a shortest distance between L₁ and L₂, and "D34" represents a shortest distance between L₃ and L₄.

The other terms in the tables are defined as follows.

"Sy" means the length of each cut in the Y direction.

"Sys" means a total of the respective lengths of cuts which are substantially in a single straight line in the Y direction.

"Gy" means an interval between cuts adjacent to each other in the Y direction.

"Gx" means an interval between cuts adjacent to each other in the X direction.

"Rsy" means a ratio of the length Sy of a cut to l₁.

"Rgy1" means a ratio of the interval Gy between cuts to l₁.

"Rgx12" means a ratio of the interval Gy between cuts to the shortest distance between L₁ and L₂.

"Rsys" means a ratio of the total Sys of the lengths of cuts to l₁.

"Sx" means the length of each cut in the X direction.

"Sxs" means a total of the respective lengths of cuts which are substantially in a single straight line in the X direction.

"Rsx" means a ratio of the length Sx of a cut to l₃.

"Rgx3" means a ratio of the interval Gx between cuts to l₃.

"Rgy34" means a ratio of the interval Gy between cuts to the shortest distance between L₃ and L₄.

"Rsxs" means a ratio of the total Sxs of the lengths of cuts to l₃.

"Continuous" means that the preform has cuts, but the cuts are not spaced apart from each other.

**[Table 1]**

| | | Example | | | | |
|---|---|---|---|---|---|---|
| | | 1 | 2 | 3 | 4 | 5 |
| Lamination structure | | [0/90] | [0/90] | [0/90] | [0]2 | [0/90] |
| l₁ [mm] | | 520 | | | | |
| l₂ [mm] | | 548 | | | | |
| D12 [mm] | | 40 | | | | |
| 0° layer | Sy [mm] | 10 | 10 | 372 | 10 | 10 |
| | Sys [mm] | 190 | 190 | 372 | 190 | 190 |
| | Gy [mm] | 10 | 10 | Continuous | 10 | 10 |
| | Gx [mm] | 10 | 20 | 10 | 10 | 10 |
| | Rsy [%] | 1.9 | 1.9 | 71.5 | 1.9 | 1.9 |
| | Rgy1 [%] | 1.9 | 1.9 | Continuous | 1.9 | 1.9 |
| | Rgx12 [%] | 25 | 50 | 25 | 25 | 25 |
| | Rsys [%] | 36.5 | 36.5 | 71.5 | 36.5 | 36.5 |
| l₃ [mm] | | 440 | | | | |
| l₄ [mm] | | 530 | | | | |
| D34 [mm] | | 30 | | | | |
| 90° layer | Sx [mm] | 10 | 10 | 180 | - | - |
| | Sxs [mm] | 190 | 190 | 360 | - | - |
| | Gx [mm] | 10 | 10 | Continuous | - | - |
| | Gy [mm] | 10 | 20 | 10 | - | - |
| | Rsx [%] | 2.3 | 2.3 | 40.9 | - | - |
| | Rgx3 [%] | 2.3 | 2.3 | Continuous | - | - |
| | Rgy34 [%] | 33.3 | 66.7 | 33.3 | - | - |
| | Rsxs [%] | 43.2 | 43.2 | 81.8 | - | - |
| Evaluated characteristics | Conformity to the shape of the mold | A | A | A | A | B |
| | Wrinkles in the central portion | A | A | A | A | B |
| | Fiber meandering during preforming | A | A | A | B | B |

**[Table 2]**

| | | Example | | | | Comparative example |
|---|---|---|---|---|---|---|
| | | 6 | 7 | 8 | 9 | 1 |
| Lamination structure | | [0/90] | [0]2 | [0/90] | [0/90] | [0/90] |
| l₁ [mm] | | 520 | | | | |
| l₂ [mm] | | 548 | | | | |
| D12 [mm] | | 40 | | | | |
| 0° layer | Sy [mm] | 10 | 50 | 50 | 50 | - |
| | Sys [mm] | 190 | 50 | 50 | 50 | - |
| | Gy [mm] | 10 | - | - | - | - |
| | Gx [mm] | 10 | 10 | 10 | 10 | - |
| | Rsy [%] | 1.9 | 9.6 | 9.6 | 9.6 | - |
| | Rgy1 [%] | 1.9 | - | - | - | - |
| | Rgx12 [%] | 25 | 25 | 25 | 25 | - |
| | Rsys [%] | 36.5 | 9.6 | 9.6 | 9.6 | - |
| l₃ [mm] | | 440 | | | | |
| l₄ [mm] | | 530 | | | | |
| D34 [mm] | | 30 | | | | |
| 90° layer | Sx [mm] | - | - | - | - | - |
| | Sxs [mm] | - | - | - | - | - |
| | Gx [mm] | - | - | - | - | - |
| | Gy [mm] | - | - | - | - | - |
| | Rsx [%] | - | - | - | - | - |
| | Rgx3 [%] | - | - | - | - | - |
| | Rgy34 [%] | - | - | - | - | - |
| | Rsxs [%] | - | - | - | - | - |
| Evaluated characteristics | Conformity to the shape of the mold | A | B | B | B | C |
| | Wrinkles in the central portion | B | A | B | A | C |
| | Fiber meandering during preforming | A | B | B | B | C |

As shown in Tables 1 and 2 and Figs. 20 to 25, in comparison with the preform in accordance with Comparative Example 1, the following observations were made in the preforms in accordance with Examples 1 to 9:
(i) no grade "C" was given, (ii) the prepreg sheets followed the shapes of the molds, (iii) no wrinkles appeared in the central portion, and (iv) no fiber meandering or fiber twisting were seen.

The preform in accordance with Example 6 is a preform obtained by stacking together (i) a reinforcing fiber base material having cuts in a direction in which the cuts cut through reinforcing fibers and (ii) a reinforcing fiber base material having no cuts in the direction in which the cuts cut through reinforcing fibers. Examples 1 to 5 each had preformability of a level equivalent to or higher than that of Example 6, despite the lack of cuts in the direction in which the cuts cut through reinforcing fibers.

Further, Table 1 and Figs. 20 to 22 indicate that a better grade is obtained in cases where cuts are present in portions corresponding to side surfaces of a corrugated structure. This is considered to be due to the following reason. In the shape illustrated in Fig. 2, compression and tension occurs in a longer side direction of the corrugated structure. As such, 11a and 11c, which are side surfaces of a corrugated structure, are more likely to have fiber twisting. This affects the central portion as well, but the presence of the cuts in the portions corresponding to the side surfaces of the corrugated structure makes it possible to minimize such an effect to the central portion.

Further, Table 2 and Figs. 23 to 25 indicate that a good grade is obtained even in cases where cuts are present only in part of a zone of the reinforcing fiber base material which zone is to undergo shear deformation and/or compressive deformation portion. This is considered to be due to the following reason. Even in a case where there is no cut in portions corresponding to side surfaces of a corrugated structure, and thus portions corresponding to 11a and 11c, which are side surfaces of a corrugated structure, have poor deformation properties, the presence of the above cuts prevents the reinforcing fiber base material from being lifted up from the mold.

From comparison of Examples 1 to 4 and 6 with Example 5, or from comparison of Examples 7 and 9 with Example 8, it is indicated that a case in which both of the two reinforcing fiber base materials to be stacked together have cuts has a better grade than a case in which only one of the reinforcing fiber base materials has cuts. Due to the presence of a layer which has no cuts and thus has poor deformation properties, even a slightest wrinkle in that layer causes all layers to appear to have a wrinkle. As such, it is considered better to form cuts in all layers.

Although the strength of a molded article was not measured, it is clear, from the fact that the preforms in accordance with the Examples have reduced wrinkles and fiber meandering, that molded articles manufactured with use of the preforms in accordance with the Examples will also have the tendency to have reduced wrinkles and fiber meandering. Further, it is clear that the molded articles will have a good appearance and high strength. Needless to say, due to having continuous fibers, the molded articles are expected to have a higher strength than a molded article that have cuts cutting through fibers. For example, as is clear from comparison of Example 1 with Example 6 or from comparison of Example 7 with Example 9, a molded article obtained in a case where a reinforcing fiber base material has cuts in a direction traversing an orientation direction of reinforcing fibers has a lower strength than a molded article obtained in a case where a reinforcing fiber base material having parallel cuts is used.

Further, comparison of Examples 1 and 2 with Example 3 indicates that Example 3 has a lower level of shape retainability of the reinforcing fiber base material and thus has a slightly lower handleability. This is because Example 3 has longer cuts which are present up to end parts of the reinforcing fiber base material. Further, in forming cuts in Example 3, the shape of the reinforcing fiber base material was unstable, and thus the workability was poor.

The preform in accordance with Comparative Example 1 showed that it was not possible to suppress the wrinkles, so that extreme fiber meandering or extreme fiber twisting occurred, as illustrated in Fig. 26. This is considered to be because reinforcing fibers which were heavily tangled with each other in the laminate lowered the degree of freedom in deformation in the step of preparing the preform, and thus lowered the conformity to the shape of the mold.

### Industrial Applicability

An invention in accordance with an aspect of the present invention makes it possible to provide a preform that allows a wrinkle and reinforcing fiber meandering to less occur during molding and that is highly moldable. A preform in accordance with an aspect of the present invention can be suitably used particularly to manufacture a molded article having a complicated structure, such as an automobile component.

### Reference Signs List

- 1:: reinforcing fiber base material
- 2:: (parallel) cut
- 3:: lower mold
- 4:: laminate (reinforcing fiber base material)
- 5:: ultrasonic cutter
- 6:: trimming jig
- 7:: debulking device
- 10:: preform mold
- 10a, 10b:: bottom
- 11:: long protrusion
- 11c, 12b, 13b, 22:: top surface
- 11a, 11b, 12a, 13a, 21:: wall
- 12, 13:: peripheral protrusion
- 20:: front raised portion
- 21a:: lower portion
- 21b:: upper portion
- 31, 32, 33, 34:: corner
- 41, 51:: first side
- 42, 52:: second side
- 43, 53:: third side
- Cu:: cell of pattern
- S:: sample

## Claims

1. A method for manufacturing a fiber-reinforced composite material molded article, comprising
a step of causing a reinforcing fiber base material to undergo deformation with use of a mold, the reinforcing fiber base material including: reinforcing fibers which are unidirectionally oriented; and a matrix resin composition,
the reinforcing fiber base material
including a zone which is to undergo shear deformation and/or compressive deformation,
having a cut in the zone which is to undergo the shear deformation and/or the compressive deformation, the cut being substantially parallel to an orientation direction of the reinforcing fibers, and
having substantially no cut that cuts through a fiber.

2. The method as set forth in claim 1, wherein the zone which is to undergo the shear deformation and/or the compressive deformation undergoes the shear deformation and/or the compressive deformation during the deformation with use of the mold.

3. The method as set forth in claim 1 or 2, wherein the mold has a three-dimensional shape.

4. The method as set forth in any one of claims 1 to 3, wherein, when a two-dimensional figure is obtained by projecting a surface of the mold onto a plane so as to maximize a projected area of the mold, which surface makes contact with the reinforcing fiber base material and/or a material other than the reinforcing fiber base material, the mold includes a zone in which a ratio (l₁/l₁') of l₁ to l₁' is different from a ratio (l₂/l₂') of l₂ to l₂' where:
a direction in which the surface is projected is a Z direction;
a direction along a shortest line segment that passes through a geometric center of the two-dimensional figure is an X direction;
a direction orthogonal to the X direction in the two-dimensional figure is a Y direction;
a shortest line segment that is parallel to the Y direction in the two-dimensional figure is L₁', a length of L₁' is l₁', a line segment that extends along the shape of the mold and corresponds to L₁' is L₁, and a length of L₁ is l₁; and
a line segment that is parallel to L₁' in the two-dimensional figure is L₂', a length of L₂' is l₂', a line segment that extends along the shape of the mold and corresponds to L₂' is L₂, and a length of L₂ is l₂.

5. The method as set forth in claim 4, wherein a part of the reinforcing fiber base material, which part corresponds to the two-dimensional figure obtained by projecting, onto the plane, the surface of the mold which surface makes contact with the reinforcing fiber base material and/or the material other than the reinforcing fiber base material, has the cut in a portion between L₁ and L₂.

6. The method as set forth in claim 4 or 5, wherein the mold includes a zone in which a ratio (l₃/l₃') of l₃ to l₃' is different from a ratio (l₄/l₄') of l₄ to l₄' where:
a shortest line segment that is parallel to the X direction in the two-dimensional figure is L₃', a length of L₃' is l₃', a line segment that extends along the shape of the mold and corresponds to L₃' is L₃, and a length of L₃ is l₃; and
a line segment that is parallel to L₃' in the two-dimensional figure is L₄', a length of L₄' is l₄', a line segment that extends along the shape of the mold and corresponds to L₄' is L₄, and a length of L₄ is 14.

7. The method as set forth in claim 6, wherein a part of the reinforcing fiber base material which part corresponds to the two-dimensional figure obtained by projecting the mold onto the plane has the cut in a portion between L₃ and L₄.

8. The method as set forth in any one of claims 1 to 7, wherein a portion of the reinforcing fiber base material which portion has the cut substantially parallel to the orientation direction of the reinforcing fibers differs in area from a portion of the mold which portion corresponds to the portion of the reinforcing fiber base material.

9. The method as set forth in any one of claims 1 to 8, wherein an amount of the shear deformation is not less than 1° and not more than 60°.

10. The method as set forth in any one of claims 1 to 9, wherein an amount of the compressive deformation is not more than 30% of an area of the zone which is to undergo the compressive deformation.

11. The method as set forth in any one of claims 1 to 10, wherein, when a two-dimensional figure is obtained by projecting the mold onto a plane so as to maximize a projected area of the mold, the cut in the reinforcing fiber base material has a length of not less than 0.5% of l₅' where a length of a longest line segment L₅' that is parallel to the orientation direction of the reinforcing fibers in the two-dimensional figure is l₅'.

12. The method as set forth in claim 11, wherein the cut includes a plurality of cuts spaced apart from each other in the orientation direction at an interval of not less than 0.5% and less than 70% of l₅'.

13. The method as set forth in claim 6 or 7, wherein the cut includes a plurality of cuts spaced apart from each other in a direction orthogonal to the orientation direction at an interval of not less than 10% of a shortest distance between L₃ and L₄ or of a shortest distance between L₁ and L₂.

14. The method as set forth in any one of claims 1 to 13, wherein (i) one or more of the reinforcing fiber base material having the cut and (ii) a reinforcing fiber base material differing in type from the one or more of the reinforcing fiber base material are molded with use of the mold.

15. The method as set forth in any one of claims 1 to 14, wherein the step of causing the reinforcing fiber base material to undergo the deformation includes preforming the reinforcing fiber base material with use of a preform mold.

16. A reinforcing fiber base material, comprising:
reinforcing fibers which are unidirectionally oriented; and
a matrix resin composition,
the reinforcing fiber base material
having a cut in a zone which is to undergo shear deformation and/or compressive deformation, the cut being substantially parallel to an orientation direction of the reinforcing fibers, and
having substantially no cut that cuts through a fiber.

17. A fiber-reinforced composite material molded article, comprising a cured product or a solidified product of a reinforcing fiber base material recited in claim 16.
